# FASCICULE DE BREVET EUROPEEN

(11) **EP 3 565 657 B1**
(45) Date de publication et mention de la délivrance du brevet: **10.03.2021**
(21) Numéro de dépôt: 17822578.5
(22) Date de dépôt: 05.12.2017
(51) Int. Cl.: B01D 61/22, B01F 15/00, B01D 65/02, B01F 3/04, C02F 3/20

(54) **SYSTEME AMELIORE D'AERATION DE MEMBRANE IMMERGEE**
VERBESSERTES SYSTEM ZUR BELÜFTUNG EINER UNTERGETAUCHTEN MEMBRAN
IMPROVED SYSTEM FOR AERATING A SUBMERGED MEMBRANE

(30) Priorité: 06.01.2017 FR 1750140
(43) Date de publication de la demande: 13.11.2019
(73) Titulaire: SUEZ Groupe, 92040 Paris la Défense Cedex (FR)
(72) Inventeur: LANGLAIS, Chrystelle, 03320 Lurcy Levis (FR)
(74) Mandataire: Marks & Clerk France
(86) Numéro de dépôt international: PCT/EP2017/081582
(87) Numéro de publication internationale: WO 2018/127345

(56) Documents cités:
- JP-A- 2002 307 091
- JP-A- 2005 169 310
- JP-A- 2008 062 196
- JP-A- 2015 182 036
- US-A1- 2001 027 950
- US-A1- 2003 001 295

## Description

### DOMAINE DE L'INVENTION

La présente invention concerne le domaine des membranes immergées. Plus spécifiquement, la présente invention concerne la prévention de l'encrassement de dispositifs d'aération de membranes immergées.

### ETAT DE L'ART PRECEDENT

Les membranes dites « immergées » sont bien connues de l'homme de l'art et permettent la filtration ou la clarification d'effluents. Le traitement d'effluents peut s'effectuer soit de manière directe, soit en couplage avec un traitement de coagulation physico-chimique et/ou en couplage avec un traitement biologique.

Les membranes immergées sont notamment utilisées dans le cadre de bioréacteurs à membrane. Les bioréacteurs à membrane sont utilisés par exemple pour la filtration des polluants ou des eaux usées.

La filtration d'effluents par la membrane induit une accumulation de matières sur la surface filtrante et une concentration des matières retenues au voisinage des membranes. Ce phénomène est appelé « accumulation de boue » (ou « sludging » en anglais).

Ce phénomène de « sludging » induit de nombreux effets négatifs : une augmentation du coût énergétique de l'installation, une diminution de la capacité hydraulique de filtration, voire un arrêt de l'installation dans les cas les plus critiques. Ce phénomène entraîne ainsi une diminution des durées de vie des membranes. Le lavage des membranes peut également s'avérer coûteux en réactifs et main d'oeuvre.

La prévention et/ou la maîtrise de ce phénomène de concentration de matière sur la surface filtrante des membranes immergées représente donc un problème de première importance pour les opérateurs de membranes immergées.

La technique dite « Membrane Air Scouring » (Expression anglaise signifiant littéralement « Récurage de Membrane à l'Air »), permet de palier ce problème. Cette technique consiste à insuffler de l'air du bas vers le haut de la membrane, pour la soumettre à un courant ascendant diphasique air/liquide. Ce courant peut contenir de moyennes à grosses bulles d'air et/ou un écoulement par poches (écoulement de liquide entrecoupé de grosses poches de gaz) et permet d'obtenir les effets suivants :
- la création de turbulences et une circulation du liquide autour de la membrane de type « air lift » autour de la membrane, afin d'évacuer la matière et réduire le phénomène de concentration de matière au sein des membranes. La circulation de type « air lift » se caractérise ici par un déplacement de bas en haut des bulles d'air à la surface de la membrane. Ces bulles d'air entraînent le liquide du bas vers le haut des membranes, ce qui crée une aspiration du liquide moins chargé à la base des membranes. Ainsi se crée un renouvellement du liquide et des matières en suspension qu'il contient au voisinage des membranes ;
- la génération d'une circulation de liquide tangentielle à la surface de la membrane pour limiter les dépôts sur la surface filtrante, générant une filtration de type pseudo-tangentielle ;
- la création de turbulences localisées à l'interface entre la bulle d'air et la membrane par de mini dépressions localisés sous la bulle, afin d'éliminer la matière déposée sur la membrane et/ou d'en limiter le dépôt ;
- l'agitation mécanique des membranes pour éliminer les matières accumulées et concentrées sur la surface filtrante et dans son environnement proche.

La technique d'aération des membranes permet ainsi de prévenir le phénomène de « sludging », constitue donc une fonction critique pour l'opération de membranes immergées, et représente un enjeu technique et économique majeur pour les opérateurs de membranes immergées. Ainsi, tout dysfonctionnement de cette fonction d'aération implique impérativement l'arrêt de la filtration.

Cependant, du fait de leur immersion dans un milieu liquide concentré en matières en suspension, ces dispositifs d'aération s'encrassent au cours du temps. Par exemple, lors de l'arrêt de l'installation d'aération, des matières, par exemple des boues biologiques, peuvent pénétrer dans le dispositif et se révéler difficiles à évacuer par la suite. En présence d'air, ces matières, piégées dans le dispositif d'aération, sèchent dans la conduite et/ou dans le diffuseur du dispositif d'aération, ce qui rend leur évacuation plus difficile encore.

Cet encrassement des diffuseurs d'air peut s'avérer problématique. En effet, il peut entraîner des pertes de charges sur la conduite d'aération, et donc une diminution de l'efficacité énergétique, et une augmentation de la consommation énergétique du dispositif.

Dans les cas extrêmes, un bouchage partiel ou complet des diffuseurs d'air entraîne l'arrêt complet de l'aération des membranes au-dessus des diffuseurs d'air bouchés. En l'absence d'aération, il se produit une « prise en masse » très rapide, c'est-à-dire une accumulation rapide de matières qui se concentrent et sont progressivement déshydratées au voisinage de la membrane pour laquelle l'aération est stoppée, tandis que l'eau est évacuée par filtration.

Les situations de bouchage complet des diffuseurs d'air imposent l'immobilisation de l'atelier de filtration pour des opérations de lavage manuel des diffuseurs et/ou des membranes longues et pénibles. De plus, ces opérations créent un risque d'endommagement physique des membranes, des consommations de réactifs et, in fine, un risque de réduction significative de la durée de vie des membranes.

Les manuels opérateurs des fournisseurs de membranes suggèrent de suivre l'encrassement des diffuseurs d'air, en particulier de suivre l'augmentation des pertes de charges dans la conduite d'air. Cette solution consiste à mesurer la pression de l'air dans la conduite d'aération des membranes à l'aide d'un manomètre et à contrôler l'augmentation de la pression dans le temps. Une variante consiste, si ladite conduite d'air est munie d'un capteur de pression, à contrôler visuellement et/ou automatiquement la courbe d'évolution de la pression dans la conduite d'aération des membranes.

En cas d'augmentation excessive de la pression, un encrassement est probablement présent et une opération de nettoyage manuelle doit être enclenchée. Cependant, la sensibilité de la mesure d'encrassement est limitée, notamment par la variabilité naturelle de la pression dans la conduite, qui dépend entre autres :
- du débit d'air en cas d'aération à débit variable pour réduire la consommation électrique ;
- de la température de l'air refoulée dans la conduite d'air ;
- de la hauteur d'eau dans le réacteur membranaire en cas de marnage important de la hauteur de liquide dans le réacteur membranaire.

Le signal de pression varie donc naturellement, ce qui réduit la capacité d'un opérateur à diagnostiquer rapidement, sur la base de courbes de pression dans la conduite d'air en opération, un encrassement des diffuseurs d'air.

De plus, cette technique permet uniquement de détecter un encrassement déjà bien installé des conduites des diffuseurs d'air avant qu'il ne soit trop tard, mais ne permet pas d'empêcher la formation de l'encrassement.

Afin d'éviter en amont le bouchage des diffuseurs d'air, l'homme de l'art connaît également des solutions permettant de nettoyer les diffuseurs d'air, basées sur le mouillage et l'évacuation des matières retenues dans la conduite d'air.

Une première solution consiste à arrêter complètement l'installation, puis injecter de l'eau propre dans la conduite d'air en direction des diffuseurs afin de forcer l'évacuation des matières piégées dans le diffuseur d'air.

Cette solution présente plusieurs inconvénients. En premier lieu, cette opération doit être réalisée manuellement, de qui engendre des coûts et limite la fréquence de réalisation du nettoyage. De plus, l'efficacité est limitée, car l'eau aura tendance à s'écouler naturellement par les orifices non encrassés plutôt que par les orifices obstrués. Le nettoyage des orifices obstrués s'en trouve limité. Enfin, dans cette solution les matières ont tendance à s'accumuler vers l'extrémité des conduites d'aération, plutôt que d'être évacuées par les orifices de petite taille. Il peut ainsi se produire un encrassement cumulatif des extrémités des conduites d'aération.

Une seconde solution consiste à effectuer un noyage/dénoyage forcé des diffuseurs d'air, c'est-à-dire successivement :
- un noyage forcé ponctuel des diffuseurs d'air et de la conduite d'air par abaissement de la pression dans la conduite d'air et/ou mise à la pression atmosphérique de la dite conduite. Ainsi, la pression dans la conduite d'air devient inférieure à la pression hydrostatique générée par la colonne d'eau, et l'eau de la colonne réalise le noyage de la conduite ;
- puis un dénoyage forcé par remise en pression rapide de la conduite d'air pour expulser l'eau et la matière de la conduite via les diffuseurs d'air.

L'abaissement, puis la remise en pression de la conduite d'air s'effectuent généralement par l'actionnement de vannes, configurées pour permettre ou empêcher l'arrivée d'air sous pression dans la conduite, et permettre ou empêcher une entrée d'air à pression atmosphérique dans la conduite.

Un avantage de cette option est qu'une même pression est exercée simultanément sur l'ensemble des orifices lors de la phase de noyage.

Un autre avantage de cette solution est qu'elle peut être réalisée automatiquement et de manière industrielle, selon la procédure suivante :
- arrêt ponctuel de l'alimentation en air de la conduite ;
- ouverture ponctuelle d'une vanne disposée sur la ligne d'aération pour mise à la pression atmosphérique de la conduite ;
- puis fermeture de la dite vanne et remise en fonctionnement de l'aération.

L'inconvénient de cette solution automatisée est que le noyage peut s'effectuer de manière défectueuse en cas de dysfonctionnement des vannes.

Les cas de dysfonctionnement peuvent survenir par exemple si :
- une ouverture seulement partielle et/ou une ouverture trop lente d'une vanne ne permet pas un noyage suffisant des conduites d'air et réduit d'autant le volume de liquide expulsé ;
- une fermeture lente réduit la vitesse d'expulsion du liquide et donc l'efficacité du dispositif, voire accélère l'encrassement des diffuseurs d'air en forçant l'entrée de matières dans la conduite d'air ;
- un temps trop court de noyage de la conduite d'air ne permet pas l'humidification nécessaire et suffisante des matières séchées dans la conduite pour en faciliter l'évacuation.

Si la procédure de noyage/dénoyage est réalisée automatiquement mais sans contrôle de son efficacité, celle-ci peut être réduite de manière significative en cas de dysfonctionnement. Si celui-ci n'est pas détecté, il peut s'avérer critique pour le fonctionnement de la membrane immergée.

La procédure de noyage/dénoyage forcé peut être supervisée manuellement par un opérateur. Cependant, un recours à un opérateur pour superviser les opérations de noyage/dénoyage implique les inconvénients suivants :
- des coûts de main d'œuvre,
- un contrôle qui ne peut être réalisé en temps réel,
- une fréquence de contrôle nécessairement limitée qui retarde la détection d'un dysfonctionnement,
- un facteur de risque dû à la marge d'appréciation de l'opérateur.

Ces facteurs limitent le caractère préventif de la solution de noyage/dénoyage forcé.

Il y a donc besoin d'un système d'aération de membrane dont l'encrassement est automatiquement empêché par des opérations de noyage/dénoyage forcé, dans lequel toute anomalie du système de noyage/dénoyage forcé est automatiquement détectée JP2015182036 décrit un système d'aération de membranes immergées avec un système de contrôle.

### RESUME DE L'INVENTION

A cet effet, l'invention décrit un système d'aération d'une membrane immergée dans une colonne de liquide, comprenant : un dispositif de fourniture d'air sous pression ; au moins un orifice d'aération de la membrane immergée ; une conduite configurée pour acheminer l'air du dispositif de fourniture d'air vers l'au moins un orifice d'aération ; une première vanne configurée pour ouvrir ou de fermer un orifice entre la conduite et l'air ambiant ; un capteur de pression configuré pour mesurer la pression dans la conduite ; ledit système étant configuré pour effectuer au moins une itération d'une opération d'évacuation de matières solides de la conduite, ladite évacuation comprenant au moins : l'arrêt de la fourniture d'air sous pression dans la conduite et l'ouverture de la première vanne, entraînant un abaissement de la pression et une pénétration de liquide dans la conduite ; la fermeture de la première vanne et la reprise de la fourniture d'air sous pression dans la conduite, entraînant une augmentation de la pression et une expulsion de liquide de la conduite par l'au moins un orifice d'aération ; ledit système étant caractérisé en ce qu'il comprend un processeur configuré pour recevoir des mesures de pression dudit capteur de pression effectuées pendant ladite opération d'évacuation, et détecter une anomalie du système d'aération à partir d'une comparaison des mesures de pression à au moins un seuil de pression supérieur ou égal à la pression hydrostatique de la colonne de liquide.

L'invention permet de garantir la disponibilité des installations membranaires.

L'invention permet de maintenir dans le temps la capacité de filtrage hydraulique d'une membrane immergée.

L'invention permet de préserver la durée de vie des membranes immergées.

L'invention permet de diminuer le coût d'opération des membranes immergées.

L'invention permet d'augmenter ou, au moins, de maintenir une bonne efficacité énergétique des dispositifs d'aération des membranes, et ainsi de diminuer leur consommation énergétique.

L'invention permet de détecter un encrassement des diffuseurs d'air sans délai, et permet ainsi de déclencher les procédures de lavage dès le début de l'encrassement.

L'invention permet de détecter toute anomalie dans la mise en oeuvre de la procédure de lavage des diffuseurs d'air.

L'invention sera décrite par rapport à des exemples de membranes immergées dans une colonne d'eau. Cependant, l'invention n'est pas limitée à ces exemples et peut être appliquée à toute colonne de liquide.

Avantageusement, le système d'aération d'une membrane immergée comprend au moins un capteur de la hauteur de liquide dans la colonne de liquide, et ledit processeur est configuré pour calculer ledit au moins un seuil de pression supérieur ou égal à la pression hydrostatique de la colonne de liquide en fonction de la hauteur de la colonne de liquide.

Cette caractéristique permet d'adapter le seuil de pression à la pression hydrostatique de la colonne d'eau dans les cas où la hauteur de la colonne d'eau varie, et donc de disposer d'un test plus fiable pour déterminer si la pression de l'air dans la conduite permet d'expulser l'eau de la conduite.

Avantageusement, ledit au moins un seuil de pression supérieur ou égal à la pression hydrostatique de la colonne de liquide est un premier seuil de pression correspondant à une pression attendue dans la conduite lors de la fourniture d'air sous pression.

Cette caractéristique permet de vérifier que la pression dans la conduite correspond bien à la pression attendue lors de la fourniture d'air sous pression, et que l'air peut s'échapper convenablement.

Avantageusement, ledit processeur est de plus configuré pour détecter des anomalies du système d'aération à partir d'une comparaison des mesures de pression à un deuxième seuil de pression représentatif d'une pression attendue dans la conduite à l'issue de la première étape d'abaissement de la pression dans la conduite.

Cette caractéristique permet de détecter un dysfonctionnement du système d'aération empêchant un abaissement suffisant de la pression dans le système d'aération, et donc un noyage suffisant de la colonne d'eau.

Avantageusement, le processeur est configuré pour calculer : un premier temps représentatif du moment auquel la pression dans la conduite devient inférieure au premier seuil de pression, à l'issue de l'enclenchement de l'arrêt de la fourniture d'air sous pression dans la conduite et l'ouverture de la première vanne ; un deuxième temps représentatif du moment auquel la pression dans la conduite atteint le deuxième seuil de pression, à l'issue de l'enclenchement de l'arrêt de la fourniture d'air sous pression dans la conduite et l'ouverture de la première vanne.

Cette caractéristique permet d'identifier le début et la fin des phases d'abaissement de la pression dans la conduite, et de mouillage de la conduite, et ainsi de détecter les anomalies liées à un dysfonctionnement de chacune de ces phases.

Avantageusement, le processeur est configuré pour détecter une anomalie si la différence entre le deuxième temps et le premier temps est inférieure à un premier seuil de durée représentatif d'une durée d'abaissement de pression maximale attendue en cas de bon fonctionnement de la première vanne et de l'arrêt de la fourniture d'air sous pression.

Cette caractéristique permet d'identifier un fonctionnement anormal des vannes permettant la fourniture d'air et/ou l'abaissement de la pression dans la conduite.

Avantageusement, le processeur est configuré pour calculer un troisième temps représentatif du moment auquel la pression dans la conduite devient supérieure au deuxième seuil de pression, à l'issue de l'enclenchement de la fermeture de la première vanne et la reprise de la fourniture d'air sous pression dans la conduite.

Cette caractéristique permet de déterminer le temps limite entre les phases de mouillage et d'expulsion, et ainsi de détecter les anomalies liées à chacune de ces phases.

Avantageusement, le processeur est configuré pour détecter une anomalie si la différence entre le troisième temps et le deuxième temps est inférieure à un second seuil de durée représentatif d'une durée de mouillage minimale attendue de la conduite, ou supérieure à un troisième seuil de durée représentatif d'une durée de mouillage maximale attendue de la conduite.

Cette caractéristique permet de détecter une anomalie de la procédure de lavage des diffuseurs d'air, due à un temps de mouillage trop faible.

Avantageusement, le processeur est configuré pour calculer un quatrième temps représentatif du moment auquel la pression dans la conduite devient supérieure ou égale au premier seuil de pression, à l'issue de l'enclenchement de la fermeture de la première vanne et la reprise de la fourniture d'air sous pression dans la conduite.

Cette caractéristique permet de détecter le moment à partir duquel l'aération de la membrane reprend.

Avantageusement, le processeur est configuré pour détecter une anomalie si la différence entre le quatrième temps et le troisième temps est inférieure à un quatrième seuil de durée représentatif d'une durée maximale attendue d'expulsion de l'eau de la conduite.

Cette caractéristique permet de détecter une anomalie de la procédure de lavage des diffuseurs d'air, due à une vitesse d'évacuation de l'eau trop faible.

Avantageusement, le processeur est configuré pour détecter une anomalie, si la pression dans la conduite dépasse un troisième seuil de pression supérieur au premier seuil.

Cette caractéristique permet de détecter un encrassement critique du système d'aération.

Avantageusement, le processeur est configuré pour détecter une anomalie, si la pression dans la conduite est inférieure à un quatrième seuil de pression inférieur au premier seuil, à l'issue de la reprise de la fourniture d'air sous pression dans la conduite.

Cette caractéristique permet d'identifier un problème critique d'aération de la membrane, dû à une vanne non fonctionnelle.

Avantageusement, le processeur est configuré pour effectuer, à chaque itération de l'opération d'évacuation de matières solides, un ensemble de tests de comparaison de pressions dans la conduite à des seuils de pression ou de durées à des seuils de durée, dans lequel : chaque test génère une alerte s'il est validé, et est associé à un niveau d'alerte ; au moins un test génère, s'il est validé, une alerte de niveau critique ; en cas d'alerte de niveau critique, le processeur est configuré pour générer l'arrêt du système d'aération ; en cas d'arrêt d'alerte de niveau non critique, l'exécution d'une nouvelle itération de l'opération d'évacuation de matières solides et d'exécution de l'ensemble de tests.

Cette caractéristique permet d'identifier les anomalies du système d'aération selon différents niveaux de criticité, et de n'arrêter le système d'aération que pour les anomalies les plus critiques. Cette caractéristique permet également de valider la présence d'anomalies non critiques, grâce à la répétition des procédures et tests si une première anomalie non critique est décelée.

Avantageusement, le système d'aération comprend une seconde vanne dont l'ouverture et la fermeture permettent respectivement de permettre ou d'empêcher l'arrivée d'air sous pression dans la conduite à partir du dispositif de fourniture d'air sous-pression, et : l'arrêt de la fourniture d'air sous pression dans la conduite est réalisée par la fermeture de la seconde vanne ; la reprise de la fourniture d'air sous pression dans la conduite est réalisée par l'ouverture de la seconde vanne.

Cette caractéristique permet de réaliser une procédure de nettoyage des conduites à la fois efficace et économe en énergie.

L'invention décrit également une méthode exécutable partiellement par un processeur d'évacuation de matières solides d'une conduite d'un système d'aération d'une membrane immergée dans une colonne de liquide, ladite méthode comprenant : une première étape d'arrêt d'une fourniture d'air sous pression dans la conduite et d'ouverture d'une première vanne entre la conduite et l'air ambiant, entraînant un abaissement de la pression et une pénétration de liquide dans la conduite ; une deuxième étape de fermeture de la première vanne et de reprise de fourniture d'air sous pression dans la conduite entrainant une augmentation de la pression dans la conduite et une expulsion de liquide de la conduite par au moins un orifice d'aération de la membrane immergée ; une troisième étape de réception par le processeur de mesures de pression d'un capteur de pression configuré pour mesurer la pression dans la conduite, lesdites mesures étant effectuées au moins entre le début de l'arrêt de la fourniture d'air et la fin de la reprise de la fourniture d'air ; une quatrième étape de détection par ledit processeur d'un anomalie du système d'aération comprenant une comparaison des mesures de pression à au moins un seuil de pression supérieur ou égal à la pression hydrostatique de la colonne de liquide.

Avantageusement, la méthode comprend une étape de calcul dudit au moins un seuil de pression supérieur ou égal à la pression hydrostatique en fonction d'une hauteur de la colonne de liquide obtenue à partir de mesures d'au moins un capteur de la hauteur de liquide dans la colonne de liquide.

Cette caractéristique permet d'adapter le seuil de pression à la pression hydrostatique de la colonne d'eau dans les cas où la hauteur de la colonne d'eau varie, et donc de disposer d'un test plus fiable pour déterminer si la pression de l'air dans la conduite permet d'expulser l'eau de la conduite.

Avantageusement, ledit au moins un seuil de pression supérieur ou égal à la pression hydrostatique de la colonne de liquide est un premier seuil de pression correspondant à une pression attendue dans la conduite lors de la fourniture d'air sous pression.

Cette caractéristique permet de vérifier que la pression dans la conduite correspond bien à la pression attendue lors de la fourniture d'air sous pression, et que l'air peut s'échapper convenablement.

Avantageusement, la quatrième étape de détection par ledit processeur d'un anomalie du système d'aération comprend une comparaison des mesures de pression à un deuxième seuil de pression représentatif d'une pression attendue dans la conduite à l'issue de la première étape d'arrêt d'une fourniture d'air sous pression dans la conduite et d'ouverture d'une première vanne entre la conduite et l'air ambiant, entraînant un abaissement de la pression et une pénétration de liquide dans la conduite.

Cette caractéristique permet de détecter un dysfonctionnement du système d'aération empêchant un abaissement suffisant de la pression dans le système d'aération, et donc un noyage suffisant de la colonne d'eau.

Avantageusement, la quatrième étape de détection par ledit processeur d'un anomalie du système d'aération comprend un calcul : d'un premier temps représentatif du moment auquel la pression dans la conduite devient inférieure au premier seuil de pression, à l'issue de l'enclenchement de l'arrêt de la fourniture d'air sous pression dans la conduite et l'ouverture de la première vanne ; d'un deuxième temps représentatif du moment auquel la pression dans la conduite atteint le deuxième seuil de pression, à l'issue de l'enclenchement de l'arrêt de la fourniture d'air sous pression dans la conduite et l'ouverture de la première vanne.

Cette caractéristique permet d'identifier le début et la fin des phases d'abaissement de la pression dans la conduite, et de mouillage de la conduite, et ainsi de détecter les anomalies liées à un dysfonctionnement de chacune de ces phases.

Avantageusement, la quatrième étape de détection par ledit processeur d'un anomalie du système d'aération comprend la détection d'une anomalie si la différence entre le deuxième temps et le premier temps est inférieure à un premier seuil de durée représentatif d'une durée d'abaissement de pression maximale attendue en cas de bon fonctionnement de la première vanne et de l'arrêt de la fourniture d'air sous pression.

Cette caractéristique permet d'identifier un fonctionnement anormal des vannes permettant la fourniture d'air et/ou l'abaissement de la pression dans la conduite.

Avantageusement, la quatrième étape de détection par ledit processeur d'une anomalie du système d'aération comprend un calcul d'un troisième temps représentatif du moment auquel la pression dans la conduite devient supérieure au deuxième seuil de pression, à l'issue de l'enclenchement de la fermeture de la première vanne et la reprise de la fourniture d'air sous pression dans la conduite.

Cette caractéristique permet de déterminer le temps limite entre les phases de mouillage et d'expulsion, et ainsi de détecter les anomalies liées à chacune de ces phases.

Avantageusement, la quatrième étape de détection par ledit processeur d'un anomalie du système d'aération comprend la détection d'une anomalie si la différence entre le troisième temps et le deuxième temps est inférieure à un second seuil de durée représentatif d'une durée de mouillage minimale attendue de la conduite, ou supérieure à un troisième seuil de durée représentatif d'une durée de mouillage maximale attendue de la conduite.

Cette caractéristique permet de détecter une anomalie de la procédure de lavage des diffuseurs d'air, due à un temps de mouillage trop faible.

Avantageusement, la quatrième étape de détection par ledit processeur d'une anomalie du système d'aération comprend le calcul d'un quatrième temps représentatif du moment auquel la pression dans la conduite devient supérieure ou égale au premier seuil de pression, à l'issue de l'enclenchement de la fermeture de la première vanne et la reprise de la fourniture d'air sous pression dans la conduite.

Cette caractéristique permet de détecter le moment à partir duquel l'aération de la membrane reprend.

Avantageusement, la quatrième étape de détection par ledit processeur d'une anomalie du système d'aération comprend la détection d'une anomalie si la différence entre le quatrième temps et le troisième temps est inférieure à un quatrième seuil de durée représentatif d'une durée maximale attendue d'expulsion de l'eau de la conduite.

Cette caractéristique permet de détecter une anomalie de la procédure de lavage des diffuseurs d'air, due à une vitesse d'évacuation de l'eau trop faible.

Avantageusement, la quatrième étape de détection par ledit processeur d'une anomalie du système d'aération comprend la détection d'une anomalie si la pression dans la conduite dépasse un troisième seuil de pression supérieur au premier seuil.

Cette caractéristique permet de détecter un encrassement critique du système d'aération.

Avantageusement, la quatrième étape de détection par ledit processeur d'une anomalie du système d'aération comprend la détection d'une anomalie si la pression dans la conduite est inférieure à un quatrième seuil de pression inférieur au premier seuil, à l'issue de la reprise de la fourniture d'air sous pression dans la conduite.

Cette caractéristique permet d'identifier un problème critique d'aération de la membrane, dû à une vanne non fonctionnelle.

Avantageusement, la méthode comprend l'exécution, à chaque itération d'évacuation de matières solides, d'un ensemble de tests de comparaison de pressions dans la conduite à des seuils de pression ou de durées à des seuils de durée, dans lequel : chaque test génère une alerte s'il est validé, et est associé à un niveau d'alerte ; au moins un test génère, s'il est validé, une alerte de niveau critique ; en cas d'alerte de niveau critique, la méthode comprend l'arrêt du système d'aération ; en cas d'arrêt d'alerte de niveau non critique, la méthode comprend l'exécution d'une nouvelle itération de l'évacuation de matières solides et l'exécution de l'ensemble de tests.

Cette caractéristique permet d'identifier les anomalies du système d'aération selon différents niveaux de criticité, et de n'arrêter le système d'aération que pour les anomalies les plus critiques. Cette caractéristique permet également de valider la présence d'anomalies non critiques, grâce à la répétition des procédures et tests si une première anomalie non critique est décelée.

Avantageusement, l'arrêt de la fourniture d'air sous pression dans la conduite est réalisé par la fermeture d'une seconde vanne dont l'ouverture et la fermeture permettent respectivement de permettre ou d'empêcher l'arrivée d'air sous pression dans la conduite à partir d'un dispositif de fourniture d'air sous-pression ; la reprise de la fourniture d'air sous pression dans la conduite est réalisée par l'ouverture de la seconde vanne.

Cette caractéristique permet de réaliser une procédure de nettoyage des conduites à la fois efficace et économe en énergie.

L'invention décrit également un programme d'ordinateur comprenant des instructions de code de programme enregistrés sur un support lisible par un ordinateur comprenant un processeur pour l'évacuation de matières solides d'une conduite d'un système d'aération d'une membrane immergée dans une colonne de liquide, ledit programme d'ordinateur comprenant : des moyens de programmation lisibles par ordinateur pour arrêter la fourniture d'air sous pression dans la conduite et commander l'ouverture de d'une première vanne entre la conduite et l'air ambiant, entraînant un abaissement de la pression et une pénétration de liquide dans la conduite ; des moyens de programmation lisibles par ordinateur pour commander une fermeture de la première vanne et une reprise d'une fourniture d'air sous pression, entraînant une augmentation de la pression dans la conduite et une expulsion de liquide de la conduite par l'au moins un orifice d'aération de la membrane immergée ; des moyens de programmation lisibles par ordinateur pour recevoir des mesures de pression dudit capteur de pression configuré pour mesurer la pression dans la conduite, lesdites mesures étant effectuées au moins entre le début de l'arrêt de la fourniture d'air et la fin de la reprise de la fourniture d'air ; des moyens de programmation lisibles par ordinateur pour détecter une anomalie du système d'aération comprenant une comparaison des mesures de pression à au moins un seuil de pression supérieur ou égal à la pression hydrostatique de la colonne de liquide.

### LISTE DES FIGURES

D'autres caractéristiques apparaîtront à la lecture de la description détaillée donnée à titre d'exemple et non limitative qui suit faite au regard de dessins annexés qui représentent:
- les figures 1a et 1b, deux exemples de dispositifs d'aération de membranes immergées selon l'état de l'art ;
- la figure 2, un système d'aération de membrane immergée selon l'invention ;
- les figures 3a et 3b, deux exemples de mesures de pression lors d'une opération d'évacuation de matières solides de la conduite d'un système d'aération de membranes immergées selon deux modes de réalisation de l'invention ;

- la figure 4, un exemple d'un ensemble de tests sur des mesures de pression, et d'alarmes générées, dans un mode de réalisation de l'invention ;
- les figures 5a, 5b, 5c, 5d, quatre exemples de signaux de pression ayant généré ou non des alarmes, dans un mode de réalisation de l'invention ;
- la figure 6, une méthode d'aération d'une membrane immergée selon l'invention.

### DESCRIPTION DETAILLEE

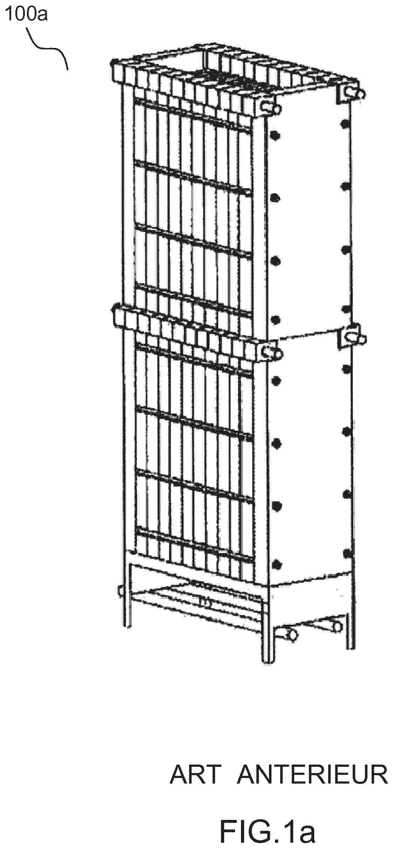

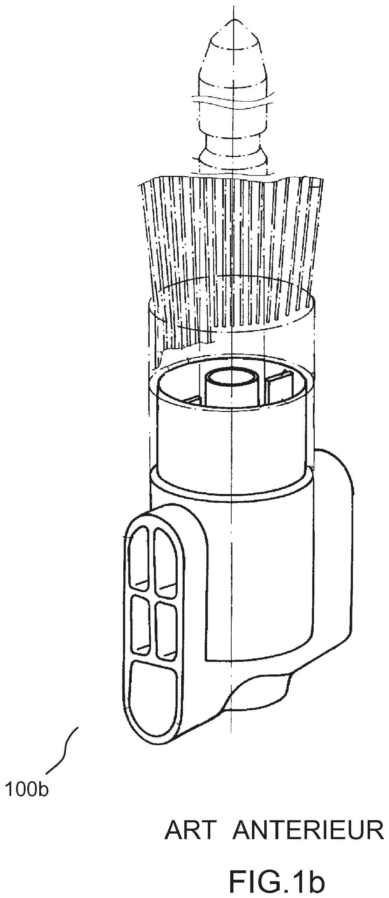

Les figures 1a et 1b représentent deux dispositifs d'aération de membranes immergées selon l'état de l'art.

La figure 1a représente un premier dispositif d'aération de membranes immergées selon l'état de l'art.

Le dispositif 100a est un dispositif simple décrit notamment dans la demande de brevet US 2015/353396. Le dispositif 100a est constitué de trous de quelques millimètres à quelques centimètres de diamètre. Les tubes sont disposés sous les membranes, de sorte que les bulles d'air qui s'en échappent remontent vers les membranes. Les bulles d'air produisent ainsi l'écoulement dysphasique permettant d'aérer les membranes.

La figure 1b représente un second dispositif d'aération de membranes immergées selon l'état de l'art.

Le dispositif 100b est notamment décrit par la demande de brevet DE 203 00546. Dans ce dispositif, les orifices d'air sont incorporés dans la pièce d'empotage des membranes, afin que l'injection d'air soit effectuée le plus près possible des membranes.

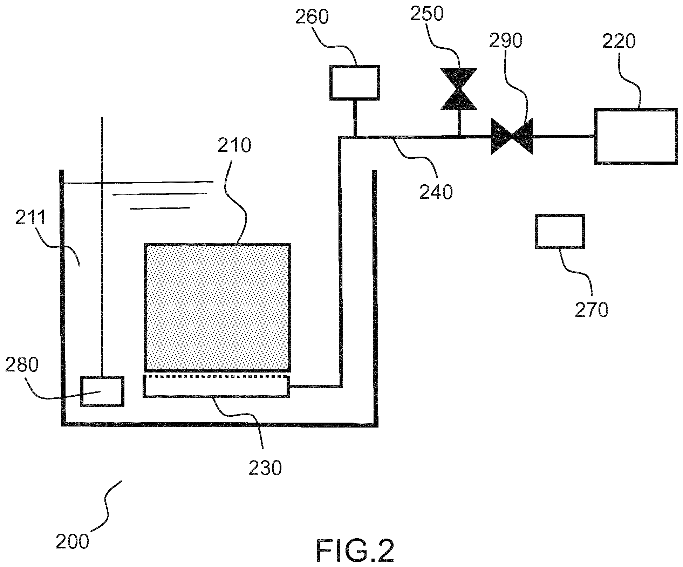

La figure 2 représente un système d'aération de membranes immergées selon l'invention.

Le système d'aération 200 permet d'aérer au moins une membrane 210 dans une colonne de liquide. Le système 200 comprend un dispositif 220 de fourniture d'air sous pression. Le dispositif 220 peut être par exemple un compresseur.

Le dispositif comprend au moins un orifice 230 d'aération de la membrane immergée, ainsi qu'une conduite 240 permettant d'acheminer l'air du dispositif 220 de fourniture d'air sous pression vers l'au moins un orifice d'aération. Le dispositif 220 peut fournir de l'air à une pression supérieure à la pression hydrostatique de la colonne d'au au niveau de l'au moins un orifice 230, de sorte que l'air peut s'échapper de l'au moins un orifice 230 et aérer la membrane. Cela permet également d'éviter que la conduite 240 ne soit immergée lors de l'aération de la membrane.

L'au moins un orifice 230 est placé de préférence sous la membrane 210, de manière à ce que les bulles d'air remontent naturellement depuis l'orifice vers la membrane afin d'aérer celle-ci. Dans un mode de réalisation de l'invention, un unique orifice comprend l'ensemble d'une section de la conduite.

Dans certains modes de réalisation, la conduite présente à son extrémité un dispositif d'aération comprenant plusieurs orifices. La dimension des orifices permet alors de générer des bulles d'air plus ou moins grosses pour aérer la membrane. Les orifices peuvent par exemple être des orifices circulaires. Les orifices peuvent tous avoir le même diamètre, ou avoir des diamètres différents. Par exemple, le diamètre d'un orifice peut être compris entre 2-3 mm, et 1-1,5 cm environ. Les orifices peuvent être disposés à différents endroits des tubes perforés, par exemple au-dessus, au-dessous, ou sur les parties latérales de ceux-ci. L'invention n'est pas restreinte à une forme ou dimensions d'orifices : ceux-ci peuvent avoir toutes formes et dimensions. Les formes et dimensions peuvent être identiques pour tous les orifices, ou être variables au sein du dispositif d'aération.

Le système 200 comprend également une première vanne 250 permettant d'ouvrir ou de fermer un orifice entre la conduite et l'air ambiant. Ainsi, lorsque la première vanne 250 est en position ouverte, l'intérieur de la conduite 240 est en contact avec l'air ambiant. Au contraire, lorsque la première vanne 250 est en position fermée, l'intérieur de la conduite 240 n'est en contact qu'avec le dispositif 220 de fourniture d'air sous pression, et la colonne de liquide 211.

Le système 220 comprend également un capteur de pression 260 configuré pour mesurer la pression dans la conduite. Le capteur de pression peut être placé à tout endroit de la conduite. Dans un mode de réalisation de l'invention, le capteur de pression 260 est placé au-dessus de la limite supérieure de la colonne de liquide 211, de sorte que, lorsque la conduite 240 est noyée, le liquide ne parvient pas jusqu'au capteur de pression 260, et celui-ci mesure en permanence la pression de l'air dans la conduite 240.

Le système 200 est configuré pour effectuer au moins une itération d'une opération d'évacuation de matières solides de la conduite.

L'opération d'évacuation de matières solides de la conduite comprend une première étape d'arrêt de la fourniture d'air sous pression dans la conduite et d'ouverture de la première vanne 250.

Dans un mode de réalisation de l'invention, l'arrêt de la fourniture d'air sous pression s'effectue en stoppant le fonctionnement du dispositif de fourniture d'air sous pression 220. Dans un autre mode de réalisation de l'invention, le système d'aération 220 comprend une seconde vanne 290 dont l'ouverture et la fermeture permettent respectivement de permettre ou d'empêcher l'arrivée d'air sous pression dans la conduite à partir du dispositif de fourniture d'air sous-pression, et l'arrêt de la fourniture d'air sous pression dans la conduite est réalisé par la fermeture de la seconde vanne. La seconde vanne 290 peut par exemple se situer en sortie du dispositif de fourniture d'air sous pression.

Dans un mode de réalisation de l'invention, l'arrêt de la fourniture d'air sous pression dans la conduite et l'ouverture de la première vanne 250 sont effectués de manière simultanée. Dans un autre mode de réalisation de l'invention, ils sont effectués de manière séquentielle, par exemple en arrêtant la fourniture d'air sous pression, puis en ouvrant la première vanne 250, ou inversement.

L'arrêt de la fourniture d'air et l'ouverture de la première vanne 250 permettent d'abaisser rapidement la pression de la conduite à la pression atmosphérique. En effet, en l'absence de fourniture d'air sous pression, et avec un orifice ouvert entre la conduite et l'air ambiant, l'air sous pression présent dans la conduite est rapidement évacué vers l'air ambiant. La pression dans la conduite 240 diminue ainsi rapidement pour atteindre la pression atmosphérique.

La pression dans la conduite 240 devient ainsi rapidement inférieure à la pression hydrostatique de la colonne de liquide 211. Le liquide pénètre alors dans la conduite 240 par l'au moins un orifice 230 d'aération de la membrane. Cette pénétration de liquide permet d'effectuer un mouillage des matières solides qui auraient pu s'accumuler dans la conduite 240, ou au niveau de l'au moins un orifice 230 d'aération.

L'opération d'évacuation de matières solides de la conduite comprend une seconde étape de fermeture de la première vanne 250 et de reprise de la fourniture d'air sous pression dans la conduite.

Dans un mode de réalisation de l'invention, la reprise de la fourniture d'air sous pression s'effectue en redémarrant le fonctionnement du dispositif de fourniture d'air sous pression 220. Dans un autre mode de réalisation de l'invention, le système d'aération 220 comprend la seconde vanne 290, et la reprise de la fourniture d'air sous pression dans la conduite est réalisée par l'ouverture de la seconde vanne.

Dans un mode de réalisation de l'invention, la reprise de la fourniture d'air sous pression dans la conduite et la fermeture de la première vanne 250 sont effectués de manière simultanée. Dans un autre mode de réalisation de l'invention, ils sont effectués de manière séquentielle, par exemple en ouvrant la première vanne 250, puis en arrêtant la fourniture d'air sous pression, ou inversement.

La reprise de la fourniture d'air et la fermeture de la première vanne 250 permettent d'augmenter rapidement la pression dans la conduite 240. En effet, en l'absence de communication entre la conduite 240 et l'air ambiant, le dispositif de fourniture d'air sous pression permet d'opérer rapidement une augmentation de la pression dans la conduite 240.

La pression dans la conduite 240 devient ainsi rapidement supérieure à la pression hydrostatique de la colonne de liquide 211. Le liquide est alors rapidement expulsé de la conduite 240 par l'au moins un orifice 230 d'aération de la membrane. Cette expulsion rapide de liquide permet d'évacuer par la même occasion les matières solides qui étaient présentes dans la conduite 240 ou à proximité de l'au moins un orifice 230 d'aération, et qui auront été préalablement mouillées.

Une telle opération d'évacuation de matières solides, également appelée noyage/dénoyage forcé, permet une évacuation automatisée et peu coûteuse des matières solides ayant pu encrasser la conduite 240.

Le système 200 comprend également un processeur 270 configuré pour recevoir des mesures de pression dudit capteur de pression effectuées pendant ladite opération d'évacuation. Dans un mode de réalisation de l'invention, le processeur 270 et le capteur de pression 260 sont situés dans le même appareil. Dans un autre mode de réalisation de l'invention, le processeur 270 est situé dans un appareil distant, par exemple une station de travail distante ou un serveur distant, à laquelle ou auquel est connecté le capteur de pression, et les mesures issues du capteur de pression 260 sont envoyées au processeur par le biais d'une connexion. La connexion peut être de tout type, par exemple une liaison filaire, une liaison radio ou une liaison de données par Internet sans fil.

Le processeur 270 est configuré pour détecter une anomalie du système d'aération 200, à partir d'une comparaison des mesures de pression à au moins un seuil de pression supérieur ou égal à la pression hydrostatique de la colonne de liquide. Plus spécifiquement, l'au moins un seuil de pression peut être supérieur ou égal à la pression hydrostatique de la colonne de liquide au niveau de l'au moins un orifice 230, pour vérifier que l'air dans la conduite est à une pression suffisamment importante pour s'échapper de la conduite par l'au moins un orifice 230, et aérer la membrane. Selon différents modes de réalisation de l'invention, l'au moins un seuil de pression supérieur ou égal à la pression hydrostatique de la colonne de liquide peut comprendre un premier seuil de pression P1 correspondant à une pression attendue dans la conduite lors de la fourniture d'air sous pression, un troisième seuil de pression PS1a inférieur au premier seuil P1, correspondant par exemple à une pression minimale attendue dans la conduite 240 lors de la fourniture d'air sous pression, ou un quatrième seuil de pression PS1b supérieur au premier seuil P1, correspondant par exemple à une pression maximale attendue dans la conduite 240 lors de la fourniture d'air sous pression.

Le processeur 270 est ainsi configuré pour vérifier que le système d'aération 200 est fonctionnel, et qu'une itération de l'opération d'évacuation de matières solides de la conduite a été correctement effectuée. Ainsi, il est possible de détecter sans délai un mauvais fonctionnement de l'opération d'évacuation de matières solides de la conduite, et de mettre en place des opérations curatives avant que la conduite ne soit complètement encrassée.

Dans un mode de réalisation de l'invention, le système 200 comprend également au moins un capteur 280 de la hauteur de la colonne de liquide, et le processeur 270 est alors configuré pour calculer ledit au moins un seuil de pression supérieur ou égal à la pression hydrostatique de la colonne de liquide, en fonction de la hauteur de la colonne de liquide. Le capteur 280 de la hauteur de la colonne de liquide peut être par exemple un capteur du type LIT (de l'acronyme anglais Level Indicating Transmitter, ou Tarnsmetteur d'Indication de Niveau), qui mesure à la fois la hauteur de la colonne de liquide, et la pression hydrostatique de celui-ci. En particulier, la hauteur de la colonne de liquide permet de calculer la pression hydrostatique au niveau de l'au moins un orifice 230 d'aération de la membrane immergée, et d'en déduire un seuil de pression supérieur ou égal à cette pression hydrostatique, permettant l'expulsion d'air de la conduite 240.

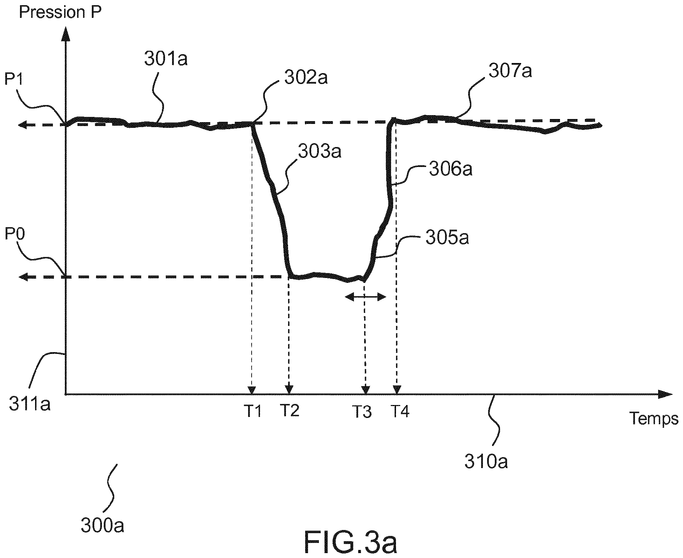

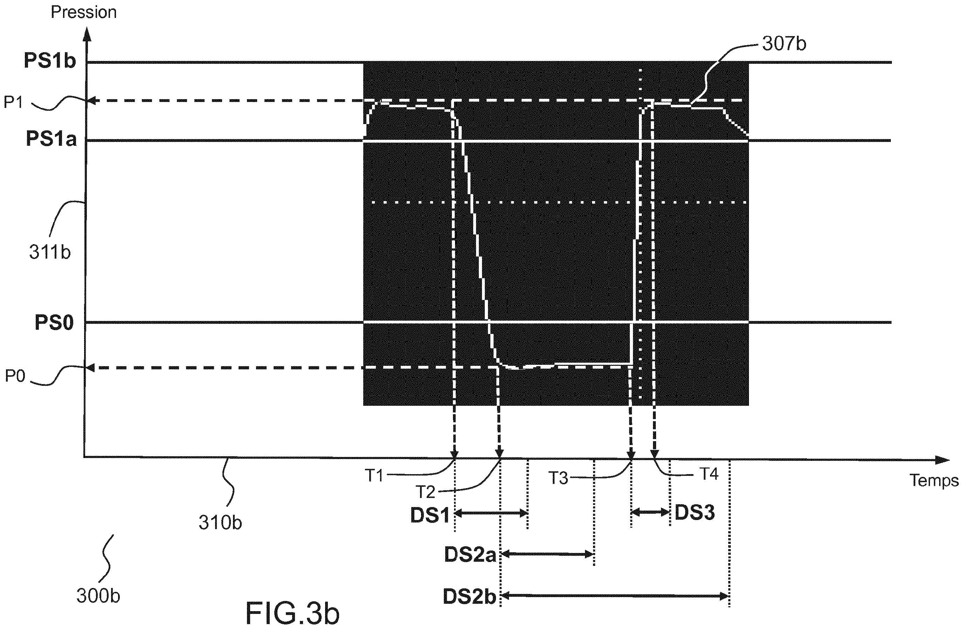

Les figures 3a et 3b représentent deux exemples de mesures de pression lors d'une opération d'évacuation de matières solides de la conduite d'un de système d'aération de membranes immergées selon deux modes de réalisation de l'invention.

Les figures 3a et 3b représentent deux exemples dans lesquels le système d'aération 200 de membrane immergée fonctionne convenablement, et dans lesquels aucune anomalie n'est survenue lors de l'opération d'évacuation de matières solides de la conduite.

La figure 3a représente un premier exemple de mesures de pression lors d'une opération d'évacuation de matières solides de la conduite d'un système d'aération 200 de membranes immergées selon un mode de réalisation de l'invention.

La courbe 300a représente l'évolution au cours du temps de la pression mesurée dans une conduite 240 par un capteur 260 d'un système d'aération 200 de membranes dans un mode de réalisation de l'invention.

L'axe horizontal 310a représente le temps, et l'axe vertical 311a la pression mesurée par le capteur 260 dans la conduite 240.

Avant le déclenchement de l'opération d'évacuation de matières solides de la conduite 240, le dispositif 220 fournit de l'air sous pression, et la première vanne 250 est fermée : la pression de l'air dans la conduite 240 oscille 301a autour d'un seuil premier seuil de pression P1 élevé. Le seuil de pression P1 est supérieur à la pression hydrostatique de la colonne de liquide au niveau de l'au moins un orifice 230 d'aération de la membrane. Ainsi, l'air s'écoule par l'au moins un orifice 230 pour aérer la membrane. Dans un ensemble de modes de réalisation de l'invention, le premier seuil de pression P1 est calculé en fonction d'une hauteur mesurée de la colonne de liquide. Dans certains modes de réalisation de l'invention, le calcul du premier seuil de pression P1 peut également prendre en compte les pertes de charges générées par l'écoulement d'air dans la conduite 240.

L'opération d'évacuation des matières solides démarre alors 302a avec l'arrêt de la fourniture d'air et l'ouverture de la première vanne 250. Lorsque le système 200 fonctionne normalement, l'air sous pression est évacué par l'ouverture de la première vanne 250, et la pression dans la conduite 240 chute rapidement 303a, pour se stabiliser 304a autour d'un second seuil de pression P0, inférieur à P1. Le second seuil de pression P0 est inférieur à la pression hydrostatique de la colonne de liquide au niveau de l'au moins un orifice 230 d'aération de la membrane. Ainsi, le liquide peut pénétrer la conduite 240 et mouiller les matières solides dans la conduite 240. Dans un ensemble de modes de réalisation de l'invention, le deuxième seuil de pression P0 correspond à la pression atmosphérique.

La pression dans la conduite 240 commence ensuite à remonter 305a, lorsque la première vanne 250 est fermée et la fourniture d'air sous pression remonte. En cas de fonctionnement normal du système 200, la pression dans la conduite 240 augmente brusquement 306a. Cette augmentation brusque permet l'évacuation rapide du liquide dans la conduite 240, et l'évacuation de matières solides qui ont été mouillées. La pression se stabilise ensuite 307a autour du premier seuil de pression P1.

Selon différents modes de réalisation de l'invention, la procédure peut avoir des durées variables, par exemple en fonction du diamètre de la canalisation, du niveau d'encrassement, etc... Par exemple, la durée de l'ensemble de la procédure peut être de l'ordre de la dizaine de secondes, et la durée de la chute de pression 303a et la remontée de la pression 306a de l'ordre de la seconde, voire du dixième de la seconde.

Durant toute l'opération, le processeur 270 reçoit des mesures de la pression dans la conduite 240, et détecte des anomalies dans le fonctionnement du système, à partir de comparaisons de ces mesures avec au moins un seuil de pression supérieur ou égal à la pression hydrostatique de la colonne de liquide, le premier seuil de pression P1 dans cet exemple.

Le processeur 270 reçoit des mesures successives de pression du capteur 260. Les mesures peuvent être envoyées à intervalles réguliers. Par exemple, le processeur 270 peut recevoir une mesure de pression toutes les millisecondes.

Dans un ensemble de modes de réalisation de l'invention, le processeur 270 est également configuré pour détecter des anomalies du système 200 à partir d'une comparaison des mesures de pression à un second seuil de pression P0 attendu à l'issue de la première étape d'abaissement de la pression dans la conduite 240.

Dans un ensemble de modes de réalisation de l'invention, le processeur 270 est configuré pour calculer un premier temps T1 représentatif du moment auquel la pression dans la conduite devient inférieure au premier seuil de pression, à l'issue de l'enclenchement de l'arrêt de la fourniture d'air sous pression dans la conduite et l'ouverture de la première vanne.

Le calcul du premier temps T1 peut s'effectuer de plusieurs manières. Par exemple, le processeur 270 peut être configuré pour comparer chaque mesure de pression au premier seuil de pression P1 à partir de l'enclenchement de l'opération d'abaissement de la pression dans la conduite, et calculer le temps T1 comme étant le temps de la première mesure inférieure au premier seuil de pression P1 après l'enclenchement de l'opération d'abaissement de la pression dans la conduite. Il est également possible de calculer le temps T1 comme étant le temps de la première mesure inférieure au premier seuil de pression P1 moins un seuil prédéfini après l'enclenchement de l'opération d'abaissement de la pression dans la conduite. Le processeur 270 peut également être configuré pour calculer la dérivée de la pression mesurée, et calculer le temps T1 comme étant le premier moment auquel la dérivée de la pression est, en valeur absolue, supérieure à un seuil prédéfini de variation de pression après l'enclenchement de l'opération d'abaissement de la pression dans la conduite. L'homme de l'art peut mettre en place de nombreux tests différents pour déterminer le premier temps T1, en utilisant en particulier les mesures de pressions dans la conduite et/ou leurs dérivées.

Dans un ensemble de modes de réalisation de l'invention, le processeur est configuré pour calculer un deuxième temps T2 représentatif du moment auquel la pression dans la conduite atteint le deuxième seuil de pression P0, à l'issue de l'enclenchement de l'arrêt de la fourniture d'air sous pression dans la conduite et l'ouverture de la première vanne.

De la même manière que pour le calcul du premier temps T1, de nombreux modes de réalisation sont possibles pour le calcul du deuxième temps T2, en utilisant notamment les mesures de pressions dans la conduite et/ou leurs dérivées. Le processeur 270 peut par exemple calculer le temps T2 comme étant :
- le premier temps auquel la pression devient inférieure ou égale au deuxième seuil de pression P0 à l'issue de l'enclenchement de l'arrêt de la fourniture d'air sous pression dans la conduite et l'ouverture de la première vanne ;
- le premier temps auquel la différence entre la pression et le seuil P1 devient inférieure à un seuil prédéfini à l'issue de l'enclenchement de l'arrêt de la fourniture d'air sous pression dans la conduite et l'ouverture de la première vanne ;
- le premier temps auquel la dérivée de la pression est inférieure à un seuil de variation de pression, et la différence entre la pression mesurée et deuxième seuil de pression P0 inférieure ou égale à un seuil prédéfini ;
L'homme de l'art peut imaginer toute solution possible pour déterminer le deuxième temps T2, par exemple en combinant plusieurs des critères ci-dessus.

Dans un ensemble de modes de réalisation de l'invention, le processeur 270 est configuré pour calculer un troisième temps T3 représentatif du moment auquel la pression dans la conduite devient supérieure au deuxième seuil de pression P0, à l'issue de l'enclenchement de la fermeture de la première vanne et la reprise de la fourniture d'air sous pression dans la conduite.

De la même manière que pour le calcul du premier temps T1 et du deuxième temps T2, de nombreux modes de réalisation sont possibles pour le calcul du troisième temps T3, en utilisant notamment les mesures de pression dans la conduite et/ou leurs dérivées. Le processeur 270 peut par exemple calculer le temps T3 comme étant :
- le premier temps auquel la pression devient supérieure au deuxième seuil de pression P0 à l'issue de l'enclenchement de la fermeture la première vanne et la reprise de la fourniture d'air sous pression dans la conduite ;
- le premier temps auquel la différence entre la pression et le deuxième seuil de pression P0 devient supérieure ou égale à un seuil prédéfini à l'issue de l'enclenchement de la fermeture la première vanne et la reprise de la fourniture d'air sous pression dans la conduite ;
- le premier temps auquel la dérivée de la pression est supérieure à un seuil de variation de pression, à l'issue de l'enclenchement de la fermeture la première vanne et la reprise de la fourniture d'air sous pression dans la conduite;
L'homme de l'art peut imaginer toute solution possible pour déterminer le troisième temps T3, par exemple en combinant plusieurs des critères ci-dessus.

Dans un ensemble de modes de réalisation de l'invention, le processeur 270 est configuré pour calculer un quatrième temps T4 représentatif du moment auquel la pression dans la conduite devient supérieure ou égale au premier seuil de pression P1, à l'issue de l'enclenchement de la fermeture de la première vanne et la reprise de la fourniture d'air sous pression dans la conduite.

De la même manière que pour le calcul du premier temps T1, du deuxième temps T2 et du troisième temps T3, de nombreux modes de réalisation sont possibles pour le calcul du quatrième temps T4, en utilisant notamment les mesures de pressions dans la conduite et/ou leurs dérivées. Le processeur 270 peut par exemple calculer le temps T4 comme étant :
- le premier temps auquel la pression devient supérieure ou égale au premier seuil de pression P1 à l'issue de l'enclenchement de la fermeture la première vanne et la reprise de la fourniture d'air sous pression dans la conduite ;
- le premier temps auquel la différence entre la pression et le premier seuil de pression P1 devient inférieure ou égale à un seuil prédéfini à l'issue de l'enclenchement de la fermeture la première vanne et la reprise de la fourniture d'air sous pression dans la conduite ;
- le premier temps auquel la dérivée de la pression est inférieure à un seuil de variation de pression, à l'issue de l'enclenchement de la fermeture la première vanne et la reprise de la fourniture d'air sous pression dans la conduite;
L'homme de l'art peut imaginer toute solution possible pour déterminer le quatrième temps T4, par exemple en combinant plusieurs des critères ci-dessus.

La figure 3b représente un second exemple de mesures de pression lors d'une opération d'évacuation de matières solides de la conduite d'un de système d'aération de membranes immergées selon un mode de réalisation de l'invention.

La courbe 300b représente l'évolution au cours du temps de la pression mesurée dans une conduite 240 par un capteur 260 d'un système d'aération de membranes dans un mode de réalisation de l'invention.

L'axe horizontal 310b représente le temps, et l'axe vertical 311b la pression mesurée.

L'évolution de la courbe de pression 300b en fonction du temps est très similaire à celle de la courbe 300a.

A l'issue de l'opération de l'opération d'évacuation des matières solides, lorsque le système fonctionne normalement, la pression 307b dans la conduite est sensiblement égale au premier seuil de pression P1 Cependant, la pression peut osciller sensiblement autour de cette valeur. Afin de détecter une anomalie du système 200, le processeur peut être configuré pour détecter si les mesures de pression dépassent un troisième seuil de pression PS1b supérieur au premier seuil de pression P1. Le processeur peut également être configuré pour détecter si la pression dans la conduite est inférieure à un quatrième seuil de pression PS1a inférieur au premier seuil de pression P1, à l'issue de la reprise de la fourniture d'air sous pression dans la conduite. Le troisième seuil de pression PS1a et le quatrième seuil de pression PS1b peuvent être choisis de manière à représenter respectivement une pression minimale et maximale attendues dans la conduite 240 lorsque le dispositif 220 fournit de l'air sous pression, et la première vanne 250 est fermée.

Les valeurs du troisième seuil de pression PS1b et du quatrième seuil de pression PS1a peuvent être choisies de telle sorte qu'une anomalie du système soit détectée, sans générer toutefois de fausse alerte, en cas d'oscillation normale de la pression mesurée dans la conduite autour du premier seuil de pression P1. Les valeurs du troisième seuil de pression PS1b et du quatrième seuil de pression PS1a peuvent par exemple être calculées en déterminant une valeur d'oscillation maximale attendue de la pression autour du premier seuil de pression P1, et en définissant le troisième seuil de pression PS1b comme étant égal au premier seuil de pression P1 plus la valeur d'oscillation maximale attendue de la pression, et le quatrième seuil de pression PS1a comme étant égal au premier seuil de pression P1 moins la valeur d'oscillation maximale attendue de la pression. La valeur d'oscillation maximale attendue de la pression peut être déterminée par exemple en observant les mesures de pression lors du fonctionnement normal du système, et en relevant l'écart maximum entre la pression mesurée et le premier seuil de pression P1. La valeur d'oscillation maximale attendue de la pression peut également être déterminée de manière théorique, en prenant en compte les variations locales de pression dans la conduite 240, et les variations attendues de fonctionnement du dispositif 220 de fourniture d'air sous pression.

Dans certains modes de réalisation de l'invention, les valeurs du troisième seuil de pression PS1b et du quatrième seuil de pression PS1a peuvent être déterminées de manière séparée. Toutes les manières possibles de calculer un troisième seuil de pression PS1b et un quatrième seuil de pression PS1a représentatifs d'une pression minimale et maximale attendues à l'issue de l'opération d'évacuation des matières solides peuvent être utilisées pour ces modes de réalisation de l'invention.

Dans un ensemble de modes de réalisation de l'invention, le processeur peut également être configuré pour détecter des anomalies en comparant des différences entre les premier temps T1, deuxième temps T2, troisième temps T3, quatrième temps T4, et des seuils de durée.

Le processeur 270 peut par exemple être configuré pour détecter une anomalie si la différence entre le deuxième temps T2 et le premier temps T1 est inférieure à un premier seuil de durée DS1 représentatif d'une durée d'abaissement de pression maximale attendue en cas de bon fonctionnement de la première vanne et de l'arrêt de la fourniture d'air sous pression.

Il peut encore être configuré pour détecter une anomalie si la différence entre le troisième temps T3 et le deuxième temps T2 est inférieure à un second seuil de durée DS2a représentatif d'une durée de mouillage minimale attendue de la conduite, ou supérieure à un troisième seuil de durée DS2b représentatif d'une durée de mouillage minimale attendue de la conduite.

Il peut encore être configuré pour détecter une anomalie si la différence entre le quatrième temps T4 et le troisième temps T3 est inférieure à un quatrième seuil de durée DS3 représentatif d'une durée maximale attendue d'expulsion de l'eau de la conduite.

Les figures 3a et 3b représentent un ensemble de seuils de pression, temps et seuils de durée qui peuvent être utilisés pour détecter une anomalie du système 200. Cependant, ils ne sont donnés qu'à titre d'exemple. Selon différents modes de l'invention, tout ou partie des seuils de pression, temps et seuils de durée représentés dans les figures 3a et 3b peuvent être utilisés pour détecter une anomalie du système 200. Dans certains modes de réalisation de l'invention, d'autres seuils de pression, temps, seuils de durée, ou toute autre donnée pouvant être déterminée à partir des mesures de pression, ou comparée à celles-ci, peuvent être utilisés.

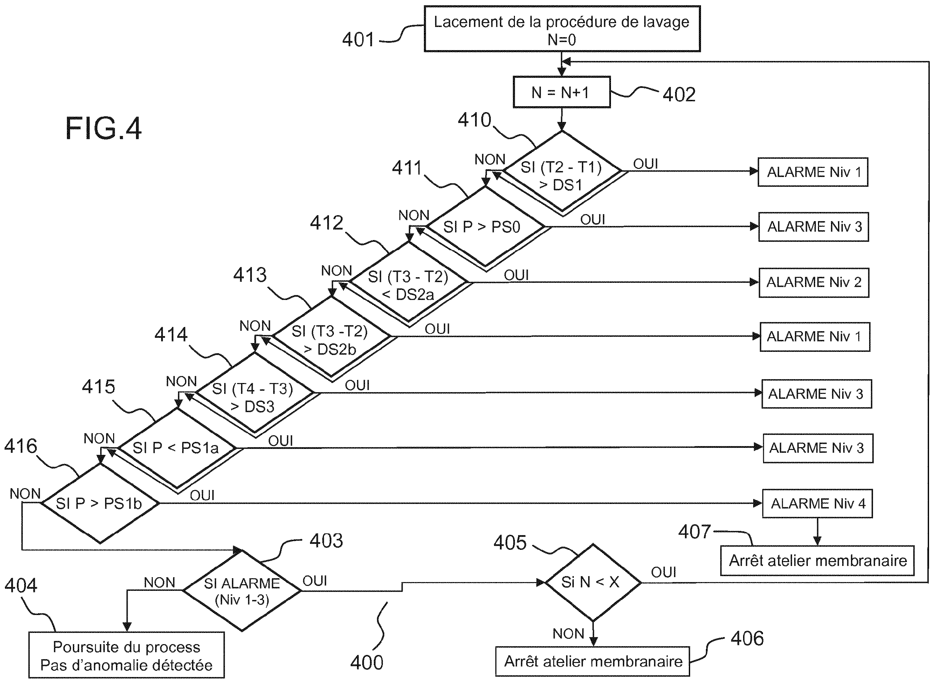

La figure 4 représente un exemple d'un ensemble de tests sur des mesures de pression, et d'alarmes générées, dans un mode de réalisation de l'invention.

L'ensemble de tests 400 est effectué par le processeur 270 dans un ensemble de modes de mise en œuvre de l'invention. L'ensemble de tests 400 est donné à titre d'exemple uniquement, selon différents modes de réalisation de l'invention, tout ou partie des tests de l'ensemble de tests 400 peuvent être effectués, d'autres tests peuvent également l'être.

L'opération d'évacuation des matières solides peut être effectuée de manière itérative, et l'ensemble de tests 400, ou un autre ensemble de tests selon l'invention, peut être effectué à chaque itération de l'opération d'évacuation des matières solides.

Dans un ensemble de modes de réalisation de l'invention, chaque test génère une alerte s'il est validé. Les alertes peuvent être classifiées selon plusieurs niveaux de gravité, dont au moins un niveau critique.

En cas d'alerte de niveau critique, une itération de l'opération d'évacuation des matières solides n'est pas relancée. Selon la cause probable de l'alerte, une opération curative peut être lancée, au besoin en arrêtant temporairement le fonctionnement du système 200 pour déclencher une réparation manuelle.

En cas d'alerte non critique, une nouvelle itération de l'opération d'évacuation des matières solides, et une nouvelle exécution de l'ensemble de tests 400, peut être effectuée afin de vérifier si l'alerte se répète, ou s'il s'agissait d'une erreur. Si l'anomalie est à nouveau détectée une opération de réparation peut être enclenchée. Selon différents modes de réalisation de l'invention, différentes alertes, ou niveaux d'alertes peuvent être associés à un nombre N de détection successifs, une opération de réparation n'étant enclenchée que si l'anomalie est détectée N fois successivement. Selon différents modes de réalisation de l'invention et différentes anomalies, le nombre N de détection d'anomalies successives peut être égale à 1, 2, 3, 4, 5 ou tout autre nombre N permettant un compromis entre le bon fonctionnement du système, et l'évitement d'un nombre excessif de réparations, selon la gravité de l'anomalie. Le nombre N, et la gravité associée à chaque test ou anomalie peut varier selon différents modes de réalisation de l'invention ou système selon l'invention. Il peut également être défini par chaque opérateur d'un système 200 selon l'invention.

Dans un ensemble de modes de réalisation de l'invention, une itération peut être enclenchée immédiatement si au moins une anomalie est détectée, afin de lever une éventuelle ambiguïté sur la détection de l'anomalie, et enclencher des réparations aussi tôt que possible. Dans un ensemble de modes de réalisation de l'invention, les dates des itérations d'évacuation de matière solides de la conduite et d'exécutions des tests sont prédéfinies, et peuvent par exemple survenir à une fréquence régulière, tant qu'une anomalie critique, ou un nombre N d'anomalies non critiques successives, ne sont n'est pas détectés. Dans certains modes de réalisation de l'invention, une itération est effectuée à l'issue d'une durée prédéfinie, lorsqu'une anomalie non critique est détectée. Divers modes de réalisation sont possibles pour définir l'occurrence des opérations d'évacuation des matières solides et d'exécution des tests, par exemple en combinant un ou plusieurs modes de réalisation définis ci-dessus.

Dans l'exemple illustré sur la figure, l'ensemble de tests 400 est composé de 7 tests 410, 411, 412, 413, 414, 415, 416, et 417. Chacun de ces tests génère, s'il est validé, une erreur, sur une échelle de criticité comportant 4 niveaux allant de 1 (erreur la moins critique) à 4 (erreur critique). Dans cet exemple, les tests sont basés sur des comparaisons entre la pression P mesurée par le capteur de pression 260, et les deuxième seuil de pression P0, troisième seuil de pression PS1b, quatrième seuil de pression PS1a définis au figures 3a et 3b, ainsi que de comparaisons entre les premier temps T1, deuxième temps T2, troisième temps T3, et quatrième temps T4 aux premier seuil de durée DS1, deuxième seuil de durée DS2, et troisième seuil de durée DS3.

Lors de l'initialisation de l'ensemble de tests 100, le lavage de la membrane est dans un premier temps enclenché 401, et un nombre N d'alertes non critiques est initialisé 402.

Une procédure d'évacuation de matières solides de la conduite est ensuite enclenchée. L'ensemble de tests 400 est effectué sur les mesures de pression effectuées par le capteur 260 durant la procédure de lavage. Le processeur 270 peut effectuer les tests, soit durant la procédure d'évacuation de matières solides, au fur et à mesure que les mesures de pression reçues permettent d'effectuer les tests, soit à l'issue de la procédure d'évacuation des matières solides, sur l'ensemble des mesures de pression.

Un premier test 410 consiste à comparer la différence entre le deuxième temps T2 et le premier temps T1 au premier seuil de durée DS1. Si cette différence est supérieure au premier seuil DS1, une alarme de niveau 1 est générée. Cette alarme peut s'interpréter comme un dysfonctionnement de vannes permettant la fourniture d'air et/ou l'abaissement de la pression dans la conduite, entraînant une baisse de la pression anormalement longue dans la conduite.

Un deuxième test 411 consiste à comparer la pression dans la conduite 240 à l'issue de l'abaissement de la pression au deuxième seuil de pression P0. Si la pression dans la conduite 240 ne descend pas en-dessous du deuxième seuil de pression P0, une alarme de niveau 3 est générée. Cette alarme peut s'interpréter comme un dysfonctionnement de vanne empêchant un abaissement suffisant de la pression dans le système d'aération, et donc un noyage suffisant du dispositif d'aération 230 et de la conduite d'air 240.

Un troisième test 412 consiste à comparer la différence entre le troisième temps T3 et le deuxième temps T2 au second seuil de durée DS2a. Si cette différence est inférieure au deuxième seuil de durée DS2a, une alarme de niveau 2 est générée. Cette alarme peut s'interpréter comme un dysfonctionnement de vannes générant une anomalie de la procédure de lavage des diffuseurs d'air, due à un temps de mouillage trop faible.

Un quatrième test 413 consiste à comparer la différence entre le troisième temps T3 et le deuxième temps T2 au troisième seuil de durée DS2b. Si cette différence est supérieure au troisième seuil de durée DS2b, une alarme de niveau 1 est générée. Cette alarme peut s'interpréter comme un dysfonctionnement de vannes permettant la fourniture d'air et/ou l'augmentation de la pression dans la conduite, entraînant une durée d'amorçage de l'augmentation de la pression anormalement longue dans la conduite.

Un cinquième test 414 consiste à comparer la différence entre le quatrième temps T4 et le troisième temps T3 au quatrième seuil de durée DS3. Si cette différence est supérieure au quatrième seuil de durée DS3, une alarme de niveau 3 est générée. Cette alarme peut s'interpréter comme une anomalie de la procédure de lavage des diffuseurs d'air, due à un dysfonctionnement de vannes impliquant une vitesse d'évacuation de l'eau de la conduite d'air noyé trop faible.

Un sixième test 415 consiste à comparer la pression P dans la conduite 240 après le quatrième temps T4, ou à l'issue de l'augmentation de la pression dans la conduite 240, au quatrième seuil de pression PS1a. Si la pression dans la conduite 240 est inférieure au quatrième seuil de pression PS1a, une erreur de niveau 3 est générée. Ce test permet de détecter une pression anormalement faible dans la conduite 240 qui ne permet pas une aération efficace de la membrane 210. Cette alarme peut s'interpréter comme un dysfonctionnement de vanne ou un dysfonctionnement du dispositif de fourniture d'air 220 qui ne fournit plus assez de pression dans la conduite 240.

Un septième test 416 consiste à comparer la pression P dans la conduite 240 après le quatrième temps T4, ou à l'issue de l'augmentation de la pression dans conduite 240, au troisième seuil de pression PS1b. Si la pression dans la conduite 240 est supérieure au troisième seuil de pression PS1b, une erreur critique de niveau 4 est générée. Ce test permet de détecter un problème critique d'aération de la membrane, dû à un encrassement avéré du système d'aération 230. Le processeur 270 est alors configuré pour déclencher un arrêt 407 de l'atelier membranaire, afin de lancer une opération correctrice, en évitant un problème grave sur l'installation.

A l'issue de l'ensemble des tests 400, si aucune erreur critique n'est survenue, le processeur 270 vérifie 403 si des erreurs non critiques sont survenues. Si aucune alarme n'est survenue, le processus d'aération continue normalement 404. Si une ou plusieurs erreurs sont survenues, le processeur 270 vérifie 405 si un nombre maximal d'erreurs est atteint. Si le nombre maximal d'erreurs non critiques est atteint, l'atelier membranaire est arrêté 406 pour réparation. Sinon, une nouvelle procédure de lavage est enclenchée, et une nouvelle itération 402 de l'ensemble de tests est effectuée. Cette procédure de lavage constitue ainsi une procédure de lavage anticipée, et permet de vérifier immédiatement si les erreurs sont reproduites. De nouvelles itérations 402 de la procédure de lavage sont donc effectuées, soit jusqu'à l'absence d'alarme 404, soit jusqu'à l'arrêt de l'installation 406, si le nombre maximal d'erreurs est atteint.

Cet exemple démontre la capacité de l'invention à permettre la définition d'une batterie de tests pour détecter toute anomalie du système 200. Cependant, l'ensemble de tests 400 est donné à titre d'exemple uniquement. D'autres ensembles avec d'autres tests sont réalisables, selon d'autres modes de mise en oeuvre de l'invention.

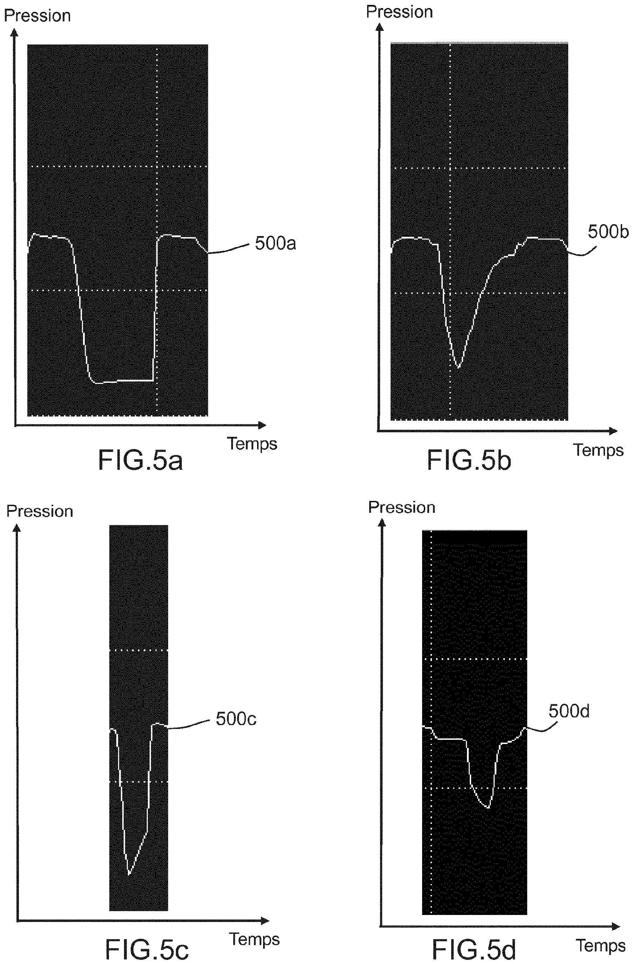

Les figures 5a, 5b, 5c, 5d représentent quatre exemples de signaux de pression ayant généré ou non des alarmes, dans un mode de réalisation de l'invention.

Les figures 5a, 5b, 5c et 5d représentent respectivement quatre signaux de pression 500a, 500b, 500c et 500d, représentant l'évolution de la pression mesurée par le capteur de pression 260 en fonction du temps, pour quatre séries de mesures.

La figure 5a représente un premier signal 500a de pression généré par un système fonctionnel, dans un mode de réalisation de l'invention. Ce signal est semblable aux signaux 300a et 300b, et n'a pas généré d'alarme.

La figure 5b représente un deuxième signal 500b de pression généré par un système dysfonctionnel. Dans cet exemple, le système d'aération est dysfonctionnel : la pression dans la conduite s'abaisse, mais n'atteint pas le deuxième seuil de pression P0. Cette anomalie peut être détectée par le système de l'invention, par exemple par le deuxième test 411.

La figure 5c représente un troisième signal 500c de pression généré par un système dysfonctionnel. Dans cet exemple, la pression P dans la conduite 240 descend bien jusqu'à au deuxième seuil P0, mais remonte aussitôt. Le temps de mouillage des matières solides est donc trop faible pour que la procédure fonctionne normalement. Cette anomalie peut être détectée par l'invention, par exemple par le troisième test 412.

La figure 5d représente un quatrième signal 500d de pression généré par un système dysfonctionnel. Dans cet exemple, le système d'aération est dysfonctionnel : la pression dans la conduite s'abaisse, mais n'atteint pas le deuxième seuil de pression P0. Cette anomalie peut être détectée par l'invention, par exemple par le deuxième test 411.

Ces exemples démontrent la capacité d'un système selon l'invention à détecter les diverses anomalies possibles d'un système d'aération de membranes immergées, ainsi qu'à identifier des causes possibles d'anomalies et le cas échéant, d'anticiper le renouvellement des équipements dysfonctionnels ainsi identifié précocement (par exemple, l'invention permet d'identifier et de remplacer une vanne dysfonctionnelle).

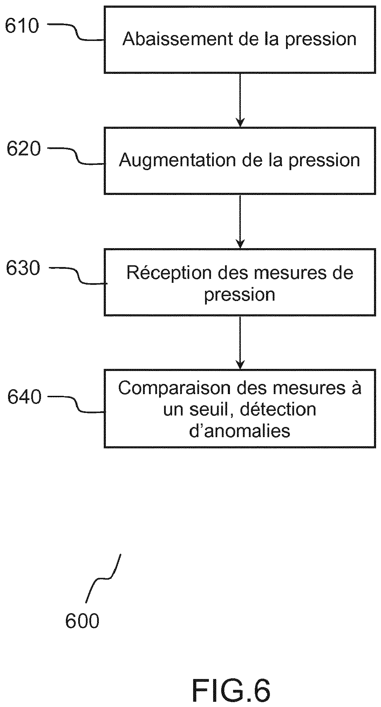

La figure 6 représente une méthode d'aération d'une membrane immergée selon l'invention.

La méthode 600 est une méthode exécutable partiellement par le processeur 270 d'évacuation de matières solides de la conduite 240 du système d'aération 200 d'une membrane immergée dans une colonne de liquide. Tous les modes de réalisation applicables au système 200 sont également applicables à la méthode 600.

La méthode 600 comprend une première étape 610 d'arrêt de la fourniture d'air sous pression dans la conduite et l'ouverture de l'au moins une vanne, entraînant un abaissement de la pression et une pénétration de liquide dans la conduite.

La méthode 600 comprend une seconde étape 620 de fermeture de la première vanne et la reprise de la fourniture d'air sous pression dans la conduite entrainant une augmentation de la pression dans la conduite et une expulsion de liquide de la conduite par l'au moins un orifice d'aération.

La méthode 600 comprend une troisième étape 630 de réception par un processeur de mesures de pression dudit capteur de pression effectuées au moins entre le début de l'arrêt de la fourniture d'air et la fin de la reprise de la fourniture d'air.

La méthode 600 comprend une quatrième étape 640 de détection par ledit processeur d'une anomalie du système d'aération comprenant une comparaison des mesures de pression à au moins un seuil de pression supérieur ou égal à la pression hydrostatique de la colonne de liquide. Le seuil de pression supérieur ou égal à la pression hydrostatique de la colonne de liquide peut être par exemple le premier seuil P1, le troisième seuil PS1a, ou le quatrième seuil PS1b. La quatrième étape 640 de détection par ledit processeur d'une anomalie du système d'aération peut, dans un ensemble de modes de réalisation de l'invention, comprendre tout ou partie des tests décrits en référence aux figures 3a, 3b et 4.

Il convient de noter que, bien que les première, deuxième, troisième et quatrième étapes soient présentées dans cet ordre sur la figure 600, l'ordre n'est pas limitatif, et les étapes de la méthode 600 peuvent être effectuées dans un autres ordre, ou en parallèle. Par exemple, la troisième étape 630 de réception des mesures de pression par le processeur peut s'effectuer au fur et à mesure que les mesures sont effectuées, par exemple en parallèle des première étape 610 et deuxième étape 620. De même, la quatrième étape 640 de détection par ledit processeur d'une anomalie peut s'effectuer progressivement, chacun des tests prévus à la quatrième étape 640 s'effectuant dès que les mesures permettant de l'effectuer sont disponibles, en parallèle des première étape 610, deuxième étape 620, et troisième étape 630.

Les exemples ci-dessus démontrent la capacité de l'invention à détecter efficacement des dysfonctionnements dans un système d'aération de membrane immergée. Ils ne sont cependant donnés qu'à titre d'exemple et ne limitent en aucun cas la portée de l'invention, définie dans les revendications ci-dessous.

## Revendications

1. Système d'aération (200) d'une membrane immergée (210) dans une colonne de liquide (211), comprenant :
- un dispositif (220) de fourniture d'air sous pression ;
- au moins un orifice (230) d'aération de la membrane immergée ;
- une conduite (240) configurée pour acheminer l'air du dispositif de fourniture d'air vers l'au moins un orifice d'aération ;
- une première vanne (250) configurée pour ouvrir ou fermer un orifice entre la conduite et l'air ambiant ;
- un capteur de pression (260) configuré pour mesurer la pression dans la conduite ;
ledit système étant configuré pour effectuer au moins une itération d'une opération d'évacuation de matières solides de la conduite, ladite évacuation comprenant au moins :
- l'arrêt de la fourniture d'air sous pression dans la conduite et l'ouverture de la première vanne, entraînant un abaissement de la pression et une pénétration de liquide dans la conduite ;
- la fermeture de la première vanne et la reprise de la fourniture d'air sous pression dans la conduite, entraînant une augmentation de la pression et une expulsion de liquide de la conduite par l'au moins un orifice d'aération ;
ledit système étant **caractérisé en ce qu'**il comprend un processeur (270) configuré pour recevoir des mesures de pression dudit capteur de pression effectuées pendant ladite opération d'évacuation, et détecter une anomalie du système d'aération à partir d'une comparaison des mesures de pression à au moins un seuil de pression supérieur ou égal à la pression hydrostatique de la colonne de liquide.

2. Système d'aération d'une membrane immergée selon la revendication 1, comprenant au moins un capteur (280) de la hauteur de liquide dans la colonne de liquide, et dans lequel ledit processeur est configuré pour calculer ledit au moins un seuil de pression supérieur ou égal à la pression hydrostatique de la colonne de liquide en fonction de la hauteur de la colonne de liquide.

3. Système d'aération d'une membrane immergée selon l'une des revendications 1 ou 2, dans lequel ledit au moins un seuil de pression supérieur ou égal à la pression hydrostatique de la colonne de liquide est un premier seuil de pression (P1) correspondant à une pression attendue dans la conduite lors de la fourniture d'air sous pression.

4. Système d'aération d'une membrane immergée selon l'une des revendications 1 à 3, dans lequel ledit processeur est de plus configuré pour détecter des anomalies du système d'aération à partir d'une comparaison des mesures de pression à un deuxième seuil de pression (P0) représentatif d'une pression attendue dans la conduite à l'issue de la première étape d'abaissement de la pression dans la conduite.

5. Système d'aération selon la revendication 4, dans lequel le processeur est configuré pour calculer :
- un premier temps (T1) représentatif du moment auquel la pression dans la conduite devient inférieure au premier seuil de pression, à l'issue de l'enclenchement de l'arrêt de la fourniture d'air sous pression dans la conduite et l'ouverture de la première vanne;
- un deuxième temps (T2) représentatif du moment auquel la pression dans la conduite atteint le deuxième seuil de pression, à l'issue de l'enclenchement de l'arrêt de la fourniture d'air sous pression dans la conduite et l'ouverture de la première vanne.

6. Système d'aération selon la revendication 5, dans lequel le processeur est configuré pour détecter une anomalie si la différence entre le deuxième temps (T2) et le premier temps (T1) est inférieure à un premier seuil de durée (DS1) représentatif d'une durée d'abaissement de pression maximale attendue en cas de bon fonctionnement de la première vanne et de l'arrêt de la fourniture d'air sous pression.

7. Système d'aération selon l'une des revendications 5 et 6, dans lequel le processeur est configuré pour calculer un troisième temps (T3) représentatif du moment auquel la pression dans la conduite devient supérieure au deuxième seuil de pression, à l'issue de l'enclenchement de la fermeture de la première vanne et la reprise de la fourniture d'air sous pression dans la conduite.

8. Système d'aération selon la revendication 7, dans lequel le processeur est configuré pour détecter une anomalie si la différence entre le troisième temps (T3) et le deuxième temps (T2) est inférieure à un second seuil de durée (DS2a) représentatif d'une durée de mouillage minimale attendue de la conduite, ou supérieure à un troisième seuil de durée (DS2b) représentatif d'une durée de mouillage maximale attendue de la conduite.

9. Système d'aération selon l'une des revendications 7 et 8, dans lequel le processeur est configuré pour calculer un quatrième temps (T4) représentatif du moment auquel la pression dans la conduite devient supérieure ou égale au premier seuil de pression, à l'issue de l'enclenchement de la fermeture de la première vanne et la reprise de la fourniture d'air sous pression dans la conduite.

10. Système d'aération selon la revendication 9, dans lequel le processeur est configuré pour détecter une anomalie si la différence entre le quatrième temps (T4) et le troisième temps (T3) est inférieure à un quatrième seuil de durée (DS3) représentatif d'une durée maximale attendue d'expulsion de l'eau de la conduite.

11. Système d'aération selon l'une des revendications 5 à 10, dans lequel le processeur est configuré pour détecter une anomalie, si la pression dans la conduite dépasse un troisième seuil de pression (PS1b) supérieur au premier seuil.

12. Système d'aération selon l'une des revendications 5 à 11, dans lequel le processeur est configuré pour détecter une anomalie, si la pression dans la conduite est inférieure à un quatrième seuil de pression (PS1a) inférieur au premier seuil, à l'issue de la reprise de la fourniture d'air sous pression dans la conduite.

13. Système d'aération selon l'une des revendications 5 à 12, dans lequel le processeur est configuré pour effectuer, à chaque itération de l'opération d'évacuation de matières solides, un ensemble de tests de comparaison de pressions dans la conduite à des seuils de pression ou de durées à des seuils de durée, dans lequel :
- chaque test génère une alerte s'il est validé, et est associé à un niveau d'alerte ;
- au moins un test génère, s'il est validé, une alerte de niveau critique ;
- en cas d'alerte de niveau critique, le processeur est configuré pour générer l'arrêt du système d'aération ;
- en cas d'alerte de niveau non critique, l'exécution d'une nouvelle itération de l'opération d'évacuation de matières solides et d'exécution de l'ensemble de tests.

14. Système d'aération selon l'une des revendications 1 à 13, comprenant une seconde vanne (290) dont l'ouverture et la fermeture permettent respectivement de permettre ou d'empêcher l'arrivée d'air sous pression dans la conduite à partir du dispositif de fourniture d'air sous-pression, et dans lequel :
- l'arrêt de la fourniture d'air sous pression dans la conduite est réalisé par la fermeture de la seconde vanne;
- la reprise de la fourniture d'air sous pression dans la conduite est réalisée par l'ouverture de la seconde vanne.

15. Méthode exécutable partiellement par un processeur (270) d'évacuation de matières solides d'une conduite (240) d'un système d'aération d'une membrane immergée dans une colonne de liquide, ladite méthode comprenant :
- une première étape (610) d'arrêt d'une fourniture d'air sous pression dans la conduite et d'ouverture d'une première vanne entre la conduite et l'air ambiant, entraînant un abaissement de la pression et une pénétration de liquide dans la conduite ;
- une deuxième étape (620) de fermeture de la première vanne et de reprise de fourniture d'air sous pression dans la conduite entrainant une augmentation de la pression dans la conduite et une expulsion de liquide de la conduite par au moins un orifice d'aération de la membrane immergée ;
- une troisième étape (630) de réception par le processeur de mesures de pression d'un capteur de pression configuré pour mesurer la pression dans la conduite, lesdites mesures étant effectuées au moins entre le début de l'arrêt de la fourniture d'air et la fin de la reprise de la fourniture d'air ;
- une quatrième étape (640) de détection par ledit processeur d'un anomalie du système d'aération comprenant une comparaison des mesures de pression à au moins un seuil de pression supérieur ou égal à la pression hydrostatique de la colonne de liquide.

16. Produit programme d'ordinateur comprenant des instructions de code de programme enregistrés sur un support lisible par un ordinateur comprenant un processeur (270) pour l'évacuation de matières solides d'une conduite (240) d'un système d'aération d'une membrane immergée dans une colonne de liquide, ledit programme d'ordinateur comprenant :
- des moyens de programmation lisibles par ordinateur pour arrêter la fourniture d'air sous pression dans la conduite et commander l'ouverture d'une première vanne entre la conduite et l'air ambiant, entraînant un abaissement de la pression et une pénétration de liquide dans la conduite ;
- des moyens de programmation lisibles par ordinateur pour commander une fermeture de la première vanne et une reprise d'une fourniture d'air sous pression, entraînant une augmentation de la pression dans la conduite et une expulsion de liquide de la conduite par au moins un orifice d'aération de la membrane immergée ;
- des moyens de programmation lisibles par ordinateur pour recevoir des mesures de pression dudit capteur de pression configuré pour mesurer la pression dans la conduite, lesdites mesures étant effectuées au moins entre le début de l'arrêt de la fourniture d'air et la fin de la reprise de la fourniture d'air ;
- des moyens de programmation lisibles par ordinateur pour détecter une anomalie du système d'aération comprenant une comparaison des mesures de pression à au moins un seuil de pression supérieur ou égal à la pression hydrostatique de la colonne de liquide.

## Patentansprüche

1. System zum Belüften (200) einer in eine Flüssigkeitssäule (211) eingetauchten Membran (210), das Folgendes umfasst:
- eine Vorrichtung (220) zum Zuführen von Druckluft;
- mindestens eine Öffnung (230) zum Belüften der eingetauchten Membran;
- eine Leitung (240), die zum Leiten von Luft von der Luftzufuhrvorrichtung zu der mindestens einen Belüftungsöffnung konfiguriert ist;
- ein erstes Ventil (250), das zum Öffnen oder Schließen einer Öffnung zwischen der Leitung und der Umgebungsluft konfiguriert ist;
- einen Drucksensor (260), der zum Messen des Drucks in der Leitung konfiguriert ist;
wobei das System zum Bewirken mindestens einer Iteration eines Vorgangs des Austreibens von Feststoffen aus der Leitung konfiguriert ist, wobei das Austreiben mindestens Folgendes beinhaltet:
- Unterbrechen der Druckluftzufuhr in der Leitung und Öffnen des ersten Ventils, was zu einem Druckabfall und zum Eindringen von Flüssigkeit in die Leitung führt;
- Schließen des ersten Ventils und Wiederaufnehmen der Druckluftzufuhr in der Leitung, was zu einem Anstieg des Drucks und zum Ausstoßen von Flüssigkeit aus der Leitung durch die mindestens eine Belüftungsöffnung führt;
wobei das System **dadurch gekennzeichnet ist, dass** es einen Prozessor (270) umfasst, der zum Empfangen von während des Austreibungsvorgangs von dem Drucksensor erhaltenen Druckmesswerten und zum Erkennen einer Anomalie des Belüftungssystems auf der Basis eines Vergleichs der Druckmesswerte mit mindestens einem Druckschwellenwert konfiguriert ist, der genauso groß wie oder größer als der hydrostatische Druck der Flüssigkeitssäule ist.

2. System zum Belüften einer eingetauchten Membran nach Anspruch 1, das mindestens einen Sensor (280) für die Flüssigkeitshöhe in der Flüssigkeitssäule umfasst, und wobei der Prozessor zum Berechnen des mindestens einen Druckschwellenwerts konfiguriert ist, der genauso groß wie oder größer als der hydrostatische Druck der Flüssigkeitssäule in Abhängigkeit von der Höhe der Flüssigkeitssäule ist.

3. System zum Belüften einer eingetauchten Membran nach einem der Ansprüche 1 oder 2, wobei der mindestens eine Druckschwellenwert, der genauso groß wie oder größer als der hydrostatische Druck der Flüssigkeitssäule ist, ein erster Druckschwellenwert (P1) ist, der einem erwarteten Druck in der Leitung während der Druckluftzufuhr entspricht.

4. System zum Belüften einer eingetauchten Membran nach einem der Ansprüche 1 bis 3, wobei der Prozessor ferner zum Erkennen von Anomalien des Belüftungssystems auf der Basis eines Vergleichs der Druckmesswerte mit einem zweiten Druckschwellenwert (P0) konfiguriert ist, der einen erwarteten Druck in der Leitung nach dem ersten Schritt des Absenkens des Drucks in der Leitung repräsentiert.

5. Belüftungssystem nach Anspruch 4, bei dem der Prozessor konfiguriert ist zum Berechnen:
- eines ersten Zeitpunkts (T1), der den Moment repräsentiert, in dem der Druck in der Leitung nach dem Aktivieren der Unterbrechung der Druckluftzufuhr in der Leitung und des Öffnens des ersten Ventils niedriger als der erste Druckschwellenwert wird;
- eines zweiten Zeitpunkts (T2), der den Moment repräsentiert, in dem der Druck in der Leitung nach dem Aktivieren der Unterbrechung der Druckluftzufuhr in der Leitung und des Öffnens des ersten Ventils den zweiten Druckschwellenwert erreicht.

6. Belüftungssystem nach Anspruch 5, wobei der Prozessor so konfiguriert ist, dass er eine Anomalie erkennt, wenn die Differenz zwischen dem zweiten Zeitpunkt (T2) und dem ersten Zeitpunkt (T1) kleiner als ein erster Zeitdauerschwellenwert (DS1) ist, der eine im Falle eines ordnungsgemäßen Betriebs des ersten Ventils und der Unterbrechung der Druckluftzufuhr erwartete maximale Druckabfallzeitdauer repräsentiert.

7. Belüftungssystem nach einem der Ansprüche 5 und 6, wobei der Prozessor zum Berechnen eines dritten Zeitpunkts (T3) konfiguriert ist, der den Moment repräsentiert, in dem der Druck in der Leitung nach dem Aktivieren des Schließens des ersten Ventils und des Wiederaufnehmens der Druckluftzufuhr in der Leitung größer als der zweite Druckschwellenwert wird.

8. Belüftungssystem nach Anspruch 7, wobei der Prozessor so konfiguriert ist, dass er eine Anomalie erkennt, wenn die Differenz zwischen dem dritten Zeitpunkt (T3) und dem zweiten Zeitpunkt (T2) kleiner als ein zweiter Zeitdauerschwellenwert (DS2a), der eine erwartete minimale Leitungsbenetzungszeitdauer anzeigt, oder größer als ein dritter Zeitdauerschwellenwert (DS2b) ist, der eine erwartete maximale Leitungsbenetzungszeitdauer anzeigt.

9. Belüftungssystem nach einem der Ansprüche 7 und 8, wobei der Prozessor zum Berechnen eines vierten Zeitpunkts (T4) konfiguriert ist, der den Moment repräsentiert, in dem der Druck in der Leitung nach dem Aktivieren des Schließens des ersten Ventils und des Wiederaufnehmens der Druckluftzufuhr in der Leitung genauso groß wie oder größer als der erste Druckschwellenwert wird.

10. Belüftungssystem nach Anspruch 9, wobei der Prozessor so konfiguriert ist, dass er eine Anomalie erkennt, wenn die Differenz zwischen dem vierten Zeitpunkt (T4) und dem dritten Zeitpunkt (T3) kleiner als ein vierter Zeitdauerschwellenwert (DS3) ist, der eine erwartete maximale Zeitdauer des Ausstoßens von Wasser aus der Leitung repräsentiert.

11. Belüftungssystem nach einem der Ansprüche 5 bis 10, wobei der Prozessor so konfiguriert ist, dass er eine Anomalie erkennt, wenn der Druck in der Leitung einen dritten Druckschwellenwert (PS1b) überschreitet, der größer als der erste Schwellenwert ist.

12. Belüftungssystem nach einem der Ansprüche 5 bis 11, wobei der Prozessor so konfiguriert ist, dass er eine Anomalie erkennt, wenn der Druck in der Leitung nach dem Wiederaufnehmen der Druckluftzufuhr in der Leitung kleiner als ein vierter Druckschwellenwert (PS la) ist, der niedriger ist als der erste Schwellenwert.

13. Belüftungssystem nach einem der Ansprüche 5 bis 12, wobei der Prozessor so konfiguriert ist, dass er bei jeder Iteration des Feststoffaustreibungsvorgangs eine Reihe von Tests durchführt, bei denen die Drücke in der Leitung mit Druckschwellenwerten oder Zeitdauerschwellenwerten verglichen werden, wobei:
- jeder Test eine Warnung erzeugt, wenn er gültig ist, und mit einer Warnstufe assoziiert ist;
- mindestens ein Test, wenn er gültig ist, einen Alarm einer kritischen Stufe erzeugt;
- der Prozessor im Falle eines Alarms einer kritischen Stufe zum Bewirken einer Unterbrechung des Belüftungssystems konfiguriert ist;
- im Falle eines Alarms einer unkritischen Stufe die Ausführung einer neuen Iteration der Feststoffausbreibungsvorgangs und die Ausführung einer Testreihe erfolgt.

14. Belüftungssystem nach einem der Ansprüche 1 bis 13, das ein zweites Ventil (290) umfasst, dessen Öffnen und Schließen das Einströmen von Druckluft aus der Druckluftzufuhrvorrichtung in die Leitung zulässt bzw. verhindert, und wobei:
- die Unterbrechung der Druckluftzufuhr in der Leitung durch Schließen des zweiten Ventils erzielt wird;
- die Wiederaufnahme der Druckluftzufuhr in der Leitung durch Öffnen des zweiten Ventils erzielt wird.

15. Verfahren, teilweise durch einen Prozessor (270) ausführbar, zum Austreiben von Feststoffen aus einer Leitung (240) eines Systems zum Belüften einer in eine Flüssigkeitssäule eingetauchten Membran, wobei das Verfahren Folgendes beinhaltet:
- einen ersten Schritt (610) des Unterbrechens einer Druckluftzufuhr in der Leitung und des Öffnens eines ersten Ventils zwischen der Leitung und der Umgebungsluft, was zu einem Druckabfall und dem Eindringen von Flüssigkeit in der Leitung führt;
- einen zweiten Schritt (620) des Schließens des ersten Ventils und des Wiederaufnehmens der Druckluftzufuhr in der Leitung, was zu einem Druckanstieg in der Leitung und zu einem Ausstoßen von Flüssigkeit aus der Leitung durch mindestens eine Belüftungsöffnung der eingetauchten Membran führt;
- einen dritten Schritt (630) des Empfangens, durch den Prozessor, von Druckmesswerten von einem Drucksensor, der zum Messen des Drucks in der Leitung konfiguriert ist, wobei die Messungen mindestens zwischen dem Beginn der Unterbrechung der Luftzufuhr und dem Ende der Wiederaufnahme der Luftzufuhr durchgeführt werden;
- einen vierten Schritt (640) des Erkennens einer Anomalie des Belüftungssystems durch den Prozessor, der das Vergleichen der Druckmesswerte mit mindestens einem Druckschwellenwert umfasst, der genauso groß wie oder größer als der hydrostatische Druck der Flüssigkeitssäule ist.

16. Computerprogrammprodukt, das Programmcode-Befehle umfasst, die auf einem computerlesbaren Medium aufgezeichnet sind, das einen Prozessor (270) zum Austreiben von Feststoffen aus einer Leitung (240) eines Systems zum Belüften einer in eine Flüssigkeitssäule eingetauchten Membran umfasst, wobei das Computerprogramm Folgendes umfasst:
- computerlesbare Programmiermittel zum Unterbrechen der Druckluftzufuhr in der Leitung und zum Steuern des Öffnens eines ersten Ventils zwischen der Leitung und der Umgebungsluft, was zu einem Druckabfall und dem Eindringen von Flüssigkeit in die Leitung führt;
- computerlesbare Programmiermittel zum Steuern des Schließens des ersten Ventils und des Wiederaufnehmens der Druckluftzufuhr, so dass der Druck in der Leitung ansteigt und Flüssigkeit durch mindestens ein Belüftungsloch in der eingetauchten Membran aus der Leitung ausgestoßen wird;
- computerlesbare Programmiermittel zum Empfangen von Druckmesswerten von dem Drucksensor, der zum Messen des Drucks in der Leitung konfiguriert ist, wobei die Messungen mindestens zwischen dem Beginn der Unterbrechung der Luftzufuhr und dem Ende der Wiederaufnahme der Luftzufuhr durchgeführt werden;
- computerlesbare Programmiermittel zum Erkennen einer Anomalie im Belüftungssystem, das das Vergleichen der Druckmesswerte mit mindestens einem Druckschwellenwert beinhaltet, der genauso groß wie oder größer als der hydrostatische Druck der Flüssigkeitssäule ist.

## Claims

1. A system for aerating (200) a membrane (210) submerged in a liquid column (211), comprising:
- a pressurised air supply device (220);
- at least one orifice (230) for aerating the submerged membrane;
- a duct (240) configured to route the air from the air supply device to the at least one aerating orifice;
- a first valve (250) configured to open or close an orifice between the duct and the ambient air;
- a pressure sensor (260) configured to measure the pressure in the duct;
said system being configured to carry out at least one iteration of an operation for discharging solid matter from the duct, said discharging comprising at least:
- shutting-off the supply of pressurised air in the duct and opening the first valve, causing a reduction in the pressure and liquid to enter the duct;
- closing the first valve and resuming the supply of pressurised air in the duct, causing an increase in the pressure and liquid to be discharged from the duct via the at least one aerating orifice;
said system being **characterised in that** it comprises a processor (270) configured to receive pressure measurements from said pressure sensor that are taken during said discharge operation and to detect an anomaly in the aerating system on the basis of a comparison of the pressure measurements with at least one pressure threshold that is higher than or equal to the hydrostatic pressure of the liquid column.

2. The system for aerating a submerged membrane according to claim 1, comprising at least one sensor (280) for sensing the height of liquid in the liquid column, and wherein said processor is configured to compute said at least one pressure threshold that is greater than or equal to the hydrostatic pressure of the liquid column as a function of the height of the liquid column.

3. The system for aerating a submerged membrane according to any one of claims 1 or 2, wherein said at least one pressure threshold that is greater than or equal to the hydrostatic pressure of the liquid column is a first pressure threshold (P1) corresponding to an expected pressure in the duct when pressurised air is supplied.

4. The system for aerating a submerged membrane according to any one of claims 1 to 3, wherein said processor is also configured to detect anomalies in the aerating system by comparing the pressure measurements to a second pressure threshold (P0) representing an expected pressure in the duct on completion of the first step of reducing the pressure in the duct.

5. The aerating system according to claim 4, wherein the processor is configured to compute:
- a first time (T1) representing the moment at which the pressure in the duct drops below the first pressure threshold, after triggering the shutting-off of the supply of pressurised air in the duct and opening the first valve;
- a second time (T2) representing the moment at which the pressure in the duct reaches the second pressure threshold, after triggering the shutting-off of the pressurised air supply in the duct and opening the first valve.

6. The aerating system according to claim 5, wherein the processor is configured to detect an anomaly if the difference between the second time (T2) and the first time (T1) is below a first duration threshold (DS1) representing a maximum pressure reduction duration that is expected in the event of the correct operation of the first valve and of the shut-off of the pressurised air supply.

7. The aerating system according to any one of claims 5 and 6, wherein the processor is configured to compute a third time (T3) representing the moment at which the pressure in the duct exceeds the second pressure threshold, after triggering the closure of the first valve and resuming the supply of pressurised air in the duct.

8. The aerating system according to claim 7, wherein the processor is configured to detect an anomaly if the difference between the third time (T3) and the second time (T2) is below a second duration threshold (DS2a) representing a minimum wetting duration that is expected in the duct or is above a third duration threshold (DS2b) representing a maximum expected wetting duration of the duct.

9. The aerating system according to any one of claims 7 and 8, wherein the processor is configured to compute a fourth time (T4) representing the moment at which the pressure in the duct becomes greater than or equal to the first pressure threshold, after triggering the closure of the first valve and resuming the supply of pressurised air in the duct.

10. The aerating system according to claim 9, wherein the processor is configured to detect an anomaly if the difference between the fourth time (T4) and the third time (T3) is below a fourth duration threshold (DS3) representing a maximum expected duration for discharging water from the duct.

11. The aerating system according to any one of claims 5 to 10, wherein the processor is configured to detect an anomaly if the pressure in the duct exceeds a third pressure threshold (PS 1b) that is greater than the first threshold.

12. The aerating system according to any one of claims 5 to 11, wherein the processor is configured to detect an anomaly, if the pressure in the duct is below a fourth pressure threshold (PS1a) below the first threshold, after resuming the supply of pressurised air in the duct.

13. The aerating system according to any one of claims 5 to 12, wherein the processor is configured to carry out, on each iteration of the operation for discharging solid matter, a set of tests for comparing pressures in the duct to pressure thresholds or to duration thresholds, wherein:
- each test generates a warning if it is confirmed and is associated with a warning level;
- at least one test generates, if it is confirmed, a critical level warning;
- the processor is configured, in the event of a critical level warning, to cause the aerating system to shutdown;
- in the event of a non-critical level warning, a new iteration of the operation for discharging solid matter and executing the set of tests is executed.

14. The aerating system according to any one of claims 1 to 13, comprising a second valve (290), the opening and closing of which respectively allows the entry of pressurised air into the duct from the pressurised air supply device to be allowed or prevented, and wherein:
- the supply of pressurised air in the duct is shut-off by closing the second valve;
- the supply of pressurised air in the duct is resumed by opening the second valve.

15. A method that can be partially executed by a processor (270) for discharging solid matter from a duct (240) of a system for aerating a membrane submerged in a liquid column, said method comprising:
- a first step (610) of shutting-off a supply of pressurised air in the duct and of opening a first valve between the duct and the ambient air, causing a reduction in the pressure and liquid to enter the duct;
- a second step (620) of closing the first valve and of resuming the supply of pressurised air in the duct, causing an increase in the pressure in the duct and liquid to be discharged from the duct via at least one orifice for aerating the submerged membrane;
- a third step (630) of receiving, by the processor, pressure measurements from a pressure sensor configured to measure the pressure in the duct, said measurements being taken at least between the start of the shut-off of the air supply and the end of the resumption of the air supply;
- a fourth step (640) of detecting, by said processor, an anomaly in the aerating system comprising comparing the pressure measurements to at least one pressure threshold that is greater than or equal to the hydrostatic pressure of the liquid column.

16. A computer program product comprising program code instructions recorded on a computer-readable medium comprising a processor (270) for discharging solid matter from a duct (240) of a system for aerating a membrane submerged in a liquid column, said computer program comprising:
- computer-readable programming means for shutting-off the pressurised air supply in the duct and controlling the opening of a first valve between the duct and the ambient air, causing a reduction in the pressure and liquid to enter the duct;
- computer-readable programming means for controlling the closure of the first valve and for resuming a supply of pressurised air, causing an increase in the pressure in the duct and liquid to be discharged from the duct via at least one aerating orifice of the submerged membrane;
- computer-readable programming means for receiving pressure measurements from said pressure sensor configured to measure the pressure in the duct, said measurements being taken at least between the start of the shut-off of the air supply and the end of the resumption of the air supply;
- computer-readable programming means for detecting an anomaly in the aerating system comprising comparing the pressure measurements to at least one pressure threshold that is greater than or equal to the hydrostatic pressure of the liquid column.
